(19) Europäisches Patentamt / European Patent Office / Office européen des brevets

(11) **EP 3 128 157 B1**

(12) **EUROPEAN PATENT SPECIFICATION**

(45) Date of publication and mention of the grant of the patent:
**29.01.2020 Bulletin 2020/05**

(21) Application number: **15773173.8**

(22) Date of filing: **31.03.2015**

(51) Int Cl.:
*F02D 29/00* (2006.01)  *B60W 30/02* (2012.01)
*F02D 29/02* (2006.01)  *F02D 43/04* (2006.01)
*B60W 30/18* (2012.01)  *B60W 10/06* (2006.01)
*B60K 28/16* (2006.01)  *F16D 43/14* (2006.01)

(86) International application number:
**PCT/JP2015/060219**

(87) International publication number:
**WO 2015/152276 (08.10.2015 Gazette 2015/40)**

(54) **DRIVE FORCE CONTROL SYSTEM, AND VEHICLE PROVIDED WITH DRIVE FORCE CONTROL SYSTEM**

ANTRIEBSKRAFTSTEUERUNGSSYSTEM UND FAHRZEUG MIT ANTRIEBSKRAFTSTEUERUNGSSYSTEM

SYSTÈME DE COMMANDE DE FORCE D'ENTRAÎNEMENT, ET VÉHICULE ÉQUIPÉ DUDIT SYSTÈME DE COMMANDE DE FORCE D'ENTRAÎNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.04.2014 JP 2014077046**
**17.09.2014 JP 2014189082**
**17.09.2014 JP 2014189083**

(43) Date of publication of application:
**08.02.2017 Bulletin 2017/06**

(73) Proprietor: **Yamaha Hatsudoki Kabushiki Kaisha Iwata-shi, Shizuoka 438-8501 (JP)**

(72) Inventor: **SEKI, Yoshimichi**
**Iwata-shi**
**Shizuoka 438-8501 (JP)**

(74) Representative: **Grünecker Patent- und Rechtsanwälte**
**PartG mbB**
**Leopoldstraße 4**
**80802 München (DE)**

(56) References cited:
**EP-A2- 2 695 761      DE-A1-102006 058 194**
**JP-A- H05 240 076    JP-A- 2014 034 964**
**US-A1- 2006 272 875**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## TECHNICAL FIELD

The present invention relates to driving force control in a vehicle having a centrifugal clutch mounted therein.

## BACKGROUND ART

Patent Document 1 describes a motorcycle of a scooter type in which a centrifugal clutch is mounted. The motorscooter described in Patent Document 1 is equipped with a driving force control system. A driving force control system is a control system which adjusts slipping of the driving wheel. A centrifugal clutch is a clutch which engages based on a centrifugal force that occurs from rotation. EP 2 695 761 A2 discloses a vehicle includes a slip detection section arranged to detect a slip of a driving wheel based on the rotation speed of the driving wheel and the vehicle speed, and an engine control section arranged and programmed to perform control to decrease the output of an engine when the slip of the driving wheel is detected by the slip detection section. When the automatic clutch is in a half clutch state and the slip of the driving wheel is detected, the engine control section executes neither ignition retarding control on an ignition device nor a fuel injection amount decreasing control on a fuel injection valve, and executes control to decrease an opening of a throttle valve.

## CITATION LIST

### PATENT LITERATURE

[Patent Document 1] Japanese Laid-Open Patent Publication No. 5-240076

## SUMMARY OF INVENTION

### TECHNICAL PROBLEM

In the scooter-type motorcycle described in Patent Document 1 in which a centrifugal clutch is mounted, the rider may feel oddness when slipping of the driving wheel is adjusted.
An objective of the present invention is to provide a driving force control system which can reduce the oddness felt by a rider, being suitable for a vehicle including a centrifugal clutch.

### SOLUTION TO PROBLEM

The above problem is solved by a driving force control system according to claim 1. Advantageous modifications are described in the dependent claims.

### ADVANTAGEOUS EFFECTS OF INVENTION

By equipping a vehicle with such a driving force control system, it is possible to reduce oddness to the rider while allowing the control system of the vehicle to exhibit its functions. In particular, setting of control thresholds $\alpha$ and $\beta$ allows to account for a response lag of the engine, or slight differences in time between changes in the engine revolution and changes in the rear-wheel speed.

### BRIEF DESCRIPTION OF DRAWINGS

[FIG. **1**] A side view showing an outer construction of a scooter-type motorcycle **1** according to Embodiment 1.
[FIG. **2**] A schematic diagram showing a construction of an engine unit **10**.
[FIG. **3**] An exploded view of a continuously variable transmission **200**.
[FIG. **4**] A detailed cross-sectional view of the engine unit **10**.
[FIG. **5**] A detailed cross-sectional view of a centrifugal clutch **300**.
[FIG. **6**] A diagram showing a state of the centrifugal clutch **300** while the engine **100** is stopped.
[FIG. **7**] A diagram showing a state of the centrifugal clutch **300** during travel.
[FIG. **8**] A schematic diagram of the structure of the engine unit **10**.

[FIG. **9**] A functional block diagram showing the construction of a driving force control system **610** according to Embodiment 1.

[FIG. **10**] A flowchart showing a procedure of processing by a traction control section **602** in a driving force controller **600** according to Embodiment 1.

[FIG. **11A**] **(a)** to **(c)** are waveform diagrams showing an instance of traction control activation by the traction control section **602**.

[FIG. **11B**] **(a)** to **(d)** are diagrams showing example waveforms according to the present invention, paying attention to the rotation speed of the centrifugal clutch **300**.

[FIG. **11C**] **(a)** to **(d)** are diagrams example conventional waveforms, paying attention to the rotation speed of the centrifugal clutch.

[FIG. **12**] A flowchart showing a procedure of processing by a traction control section **602** according to Embodiment 2.

[FIG. **13A**] **(a)** to **(c)** are waveform diagrams showing an instance of traction control activation according to Embodiment 2.

[FIG. **13B**] **(a)** to **(d)** are diagrams showing example waveforms according to the present invention, paying attention to the rotation speed of the centrifugal clutch **300**.

[FIG. **14**] A flowchart showing a procedure of processing by a traction control section **602** according to a related example which is not claimed but is useful to understand the invention.

[FIG. **15**] **(a)** to **(e)** are diagrams showing example waveforms according to a related example which is not claimed but is useful to understand the invention, paying attention to the rotation speed of the centrifugal clutch **300**.

[FIG. **16**] **(a)** to **(d)** are waveform diagrams showing an instance of traction control activation according to a related example which is not claimed but is useful to understand the invention.

## DESCRIPTION OF EMBODIMENTS

A centrifugal clutch to be adopted in a vehicle is structurally characterized that it allows a plurality of transmission paths of motive power to be automatically, and mechanically, connected or disconnected depending on a travel state (e.g., a state of engine revolution value) of the vehicle.

As used herein, "automatically" means not requiring the rider to directly perform the manipulations of engaging and disengaging the clutch. The centrifugal clutch is automatically manipulated in accordance with a travel state of the vehicle. The centrifugal clutch is a clutch which, depending on the magnitude of a centrifugal force which occurs in component members of the centrifugal clutch in accordance with the travel state of the vehicle, mechanically connects or disconnects the plurality of transmission paths of motive power. Engagement and disengagement of the centrifugal clutch do not require any conscious clutch manipulations to be made by the rider.

As mentioned above, "to mechanically connect or disconnect a plurality of transmission paths of motive power" means structurally connecting together the plurality of transmission paths of motive power so that a driving force which is generated by the engine will be transmitted, or structurally disconnecting them so that the aforementioned driving force will not be transmitted.

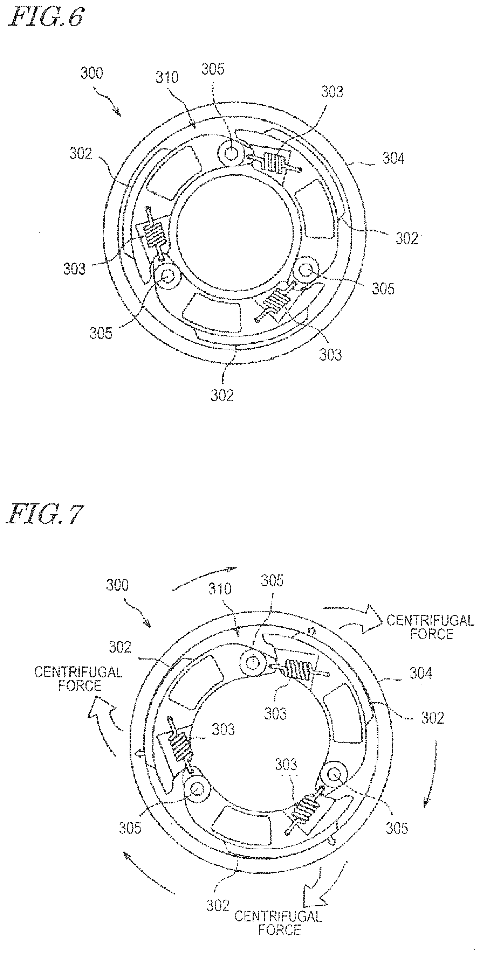

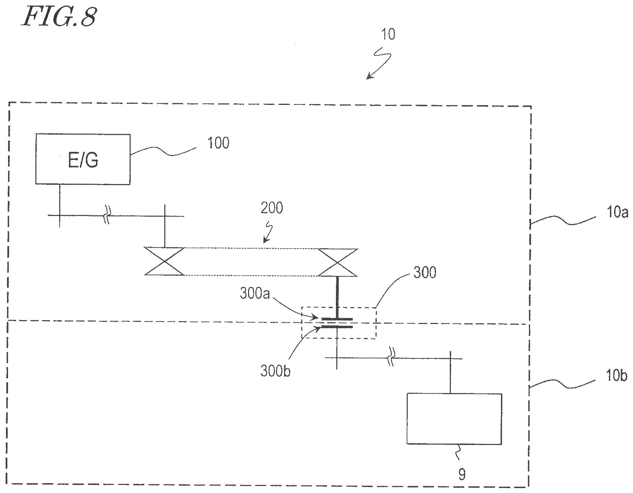

Further in the present specification, construction related to a centrifugal clutch is defined as follows. The detailed construction of a centrifugal clutch and the details of a transmission path of motive power will be later described with reference to FIGS. **6** to **8**; nonetheless, construction related to a centrifugal clutch is defined as below. For ease of understanding, reference numerals of the component elements as indicated in FIG. **8** will occasionally be mentioned in the following definitions.

An "upstream member of the centrifugal clutch" is a member to be mechanically connected to the engine of a vehicle. An upstream member of the centrifugal clutch is mechanically linked with the engine, and always rotates in harmony with the engine rotation. While the engine is stopped, the upstream member of the centrifugal clutch is also stopped. As the upstream member rotates, centrifugal force of a magnitude which is in accordance with the magnitude of its rotation speed will act on the upstream member. A rotating radius of a movable member which is provided on the upstream member keeps increasing with the centrifugal force, until the upstream member comes in contact with a downstream member of the centrifugal clutch (which will be described next), and eventually becomes mechanically connected with it. The upstream member of the centrifugal clutch corresponds to a first mechanism **300a**, for example, in FIG. **8**.

A "downstream member of the centrifugal clutch" is a member to be mechanically connected with or disengaged from the upstream member, depending on the magnitude of a centrifugal force which occurs with engine rotation. In a state of being mechanically connected with the upstream member, the downstream member of the centrifugal clutch rotates in harmony with engine rotation. In a state of being mechanically disengaged from the upstream member, the downstream member of the centrifugal clutch rotates at a different rotation speed from the revolutional speed of the engine, or is stopped even though the engine may be rotating. The downstream member of the centrifugal clutch corresponds to a second mechanism **300b**, for example, in FIG. **8**.

An "upstream-of-centrifugal-clutch path" refers to, within a transmission path of motive power through which the motive power generated by the engine is transmitted to the driving wheel, the path from the engine to the upstream member of the centrifugal clutch. The motive power that is generated by the engine is always transmitted in the upstream-of-centrifugal-clutch path. The upstream-of-centrifugal-clutch path undergoes rotation with engine rotation, and comes to a stop when the engine stops. In other words, the upstream-of-centrifugal-clutch path undergoes rotation integrally with the engine. The upstream-of-centrifugal-clutch path corresponds to a first driving system **10a**, for example, in FIG. **8**.

A "downstream-of-centrifugal-clutch path" refers to, within a transmission path of motive power through which the motive power generated by the engine is transmitted to the driving wheel, the path from the downstream member of the centrifugal clutch to the driving wheel. Depending on the situation which the centrifugal clutch is in, the downstream-of-centrifugal-clutch path may transmit the same or different motive power as/from that in the upstream-of-centrifugal-clutch path, or does not transmit any motive power.

As follows, transmission of motive power is more specifically described. When the upstream member and the downstream member of the centrifugal clutch are mechanically connected, the rotation speed of the upstream member of the centrifugal clutch and the rotation speed of the downstream member will be equal if the upstream member and the downstream member of the centrifugal clutch are rotating in a completely integral manner. As a result, the downstream-of-centrifugal-clutch path transmits the same motive power as does the upstream-of-centrifugal-clutch path. This state is a state in which the centrifugal clutch is completely engaged.

Note that, generally speaking, even at an engine revolutional speed at which the centrifugal clutch can be regarded as completely engaging by design, some deviation (difference) may exist between the rotation speed of the upstream member of the centrifugal clutch and the rotation speed of the downstream member. A "state in which the centrifugal clutch is completely engaging" or a "state in which the rotation speed of the upstream member and the rotation speed of the downstream member of the centrifugal clutch are equal" may be recognized notwithstanding the presence of the same level of difference as such a difference.

On the other hand, when the upstream member and the downstream member of the centrifugal clutch are mechanically connected but are slipping, i.e., when the centrifugal clutch is in a ride-the-clutch state, the downstream-of-centrifugal-clutch path transmits different motive power from that in the upstream-of-centrifugal-clutch path. The "centrifugal clutch being in a ride-the-clutch state" means an intermediate state, which is a transient state, between a state where the centrifugal clutch is engaging and a state where the centrifugal clutch is disengaged. In a ride-the-clutch state, the rotation speed of the upstream member and the rotation speed of the downstream member of the centrifugal clutch are not equal. The downstream-of-centrifugal-clutch path corresponds to a second driving system **10b**, for example, in FIG. **8**.

The centrifugal clutch automatically turns ON or OFF the aforementioned transmission of motive power between the upstream-of-centrifugal-clutch path and the downstream-of-centrifugal-clutch path, depending on the magnitude of the centrifugal force which is in accordance with the revolutional speed of the engine. Unlike any clutch that is manipulated by the rider, a centrifugal clutch is a clutch which does not allow the rider to arbitrarily control connection or disconnection of the transmission path of motive power.

The inventors have earnestly studied the state in which the driving wheel of a vehicle having a centrifugal clutch mounted therein is slipping. In particular, the inventors have studied a vehicle which includes a centrifugal clutch and which is also equipped with a driving force control system. Herein, a driving force control system is a system that performs the control of adjusting the slipping of the driving wheel in a state in which the driving wheel is slipping.

To "adjust slipping" means varying the revolutional speed of the engine so as to control the slip to a target level. As used herein, "slipping" refers to a physical parameter which is expressed as a slip amount or a slip rate of the driving wheel, for example. Adjustment of slipping encompasses increasing the slip to a target level, or decreasing the slip to a target level. In order to vary the revolutional speed of the engine, an electronically controlled throttle or a fuel injector may be operated, for example, to vary the amount of fuel supplied to the engine. The same also holds true in the following description.

It has been found through the study that situations may arise where, as the driving force control system intervenes to adjust the slipping of the driving wheel, the centrifugal force changes as a function of the engine rotation, whereby the centrifugal clutch may be automatically disengaged. What should be noted here is the fact that disengagement of the centrifugal clutch is automatically achieved in accordance with the magnitude of centrifugal force, and not by the rider's will. Also note that it is not dependent on the rider's will whether the driving force control system is to intervene or not.

The inventors have found out that, due to complex relationship between the centrifugal clutch and the driving force control system operating irrespective of the rider's will, the rider experiences a feeling of oddness concerning the vehicle behavior. As used herein, "oddness" means an oddness that is felt by a rider of a vehicle which goes through different behavior from the behavior that is intended by the rider.

In order to reduce oddness to the rider, it is necessary to operate the centrifugal clutch in a manner of accounting for the relationship between the centrifugal clutch and the driving force control system.

Therefore, the inventors have decided to control a reduction rate (A) under non-connection concerning the upstream-of-centrifugal-clutch path, defined as below, is smaller than a reduction rate (B) under connection concerning the upstream-of-centrifugal-clutch path, defined as below, when in a state in which the driving wheel is slipping.

Reduction rate (A) under non-connection concerning the upstream-of-centrifugal-clutch path: a reduction rate in the rotation speed of the upstream-of-centrifugal-clutch path when a difference exists between the rotation speed of the upstream member of the centrifugal clutch and the rotation speed of the downstream member of the centrifugal clutch.

Reduction rate (B) under connection concerning the upstream-of-centrifugal-clutch path: a reduction rate in the rotation speed of the upstream-of-centrifugal-clutch path when the rotation speed of the upstream member of the centrifugal clutch is equal to the rotation speed of the downstream member of the centrifugal clutch before a difference emerges between the rotation speed of the upstream member of the centrifugal clutch and the rotation speed of the downstream member of the centrifugal clutch.

As a result, in a state in which the driving wheel is slipping, while adjusting slipping of the driving wheel, it is possible to reduce a decrease in the centrifugal force of the upstream member of the centrifugal clutch, which causes the centrifugal clutch to automatically engage or disengage, when a difference exists between the rotation speed of the upstream-of-centrifugal-clutch path and the rotation speed of the downstream-of-centrifugal-clutch path. As a result, a driving force control system is provided which can reduce oddness felt by the rider while being able to adjust slipping of the driving wheel.

Moreover, the inventors have conceived of controlling the state of engagement of the centrifugal clutch, in a state in which the driving wheel is slipping; or more specifically, performing control to suppress disengagement of the centrifugal clutch in accordance with at least one of a physical parameter concerning rotation of the upstream-of-centrifugal-clutch path and a physical parameter concerning rotation of the downstream-of-centrifugal-clutch path, in a state in which the driving wheel is slipping. As used herein, a "physical parameter" may be rotation speed (i.e., the number of rotations per unit time) or torque, for example (hereinafter the same applies throughout the present specification).

In "a state in which the driving wheel is slipping", the driving force control system is intervening to perform the control of adjusting the slipping of the driving wheel, whereby the rotation speed of the centrifugal clutch has begun to slow down. A rotation speed at which disconnection will occur between the upstream-of-centrifugal-clutch path and the downstream-of-centrifugal-clutch path currently being connected is known in advance by design. Therefore, especially by checking the physical parameter(s) concerning rotation of the upstream-of-centrifugal-clutch path and/or the downstream-of-centrifugal-clutch path, it is possible to infer whether the centrifugal clutch risks becoming disengaged or not. If the centrifugal clutch risks becoming disengaged, control may be performed to suppress disengagement of the centrifugal clutch, whereby disengagement of the centrifugal clutch is suppressed while adjusting the slipping in a state in which the driving wheel is slipping; thus, oddness felt by the rider can be reduced. In other words, the aforementioned control to suppress disengagement of the centrifugal clutch has proven effective. Oddness to the rider can be more appropriately reduced by relying on both of the physical parameter concerning rotation of the upstream-of-centrifugal-clutch path and the physical parameter concerning rotation of the downstream-of-centrifugal-clutch path, in performing the control to suppress disengagement of the centrifugal clutch.

The question of whether oddness is felt to the rider or not may be mapped to acceleration values of the vehicle, for example. The description in the present specification assumes that, in the aforementioned situation where the centrifugal clutch risks becoming disengaged, the rider will not feel oddness (a velocity decrease) unless the vehicle has a negative acceleration value, i.e., unless it is decelerating. When the acceleration value of the vehicle becomes negative, the rider perceives a velocity decrease (deceleration) of the vehicle. However, the determination as to whether the rider will feel oddness or not is not limited to the above. It may be determined that oddness is being felt to the rider when the centrifugal clutch becomes disengaged; it may be determined that oddness is being felt to the rider when the velocity of travel of the vehicle is low in view of the rider's manipulation; and various other determinations would also be possible.

In the present specification, "disengagement of the centrifugal clutch" means the connection between the upstream-of-centrifugal-clutch path and the downstream-of-centrifugal-clutch path becoming lost for a period sufficiently long for the rider to perceive a velocity decrease of the vehicle, or longer. Typically, "disengagement of the centrifugal clutch" occurs when the upstream-of-centrifugal-clutch path and the downstream-of-centrifugal-clutch path become completely disconnected so that the vehicle decelerates.

To "suppress disengagement of the centrifugal clutch" is a notion broadly encompassing any control to avoid disengagement of the centrifugal clutch. For example, in a situation where the rotation speed of the centrifugal clutch decreases to a point where the centrifugal clutch risks becoming disengaged, increasing the engine revolutional speed to increase the rotation speed of the centrifugal clutch, thereby maintaining its engagement, corresponds to suppressing disengagement of the centrifugal clutch. Moreover, when the centrifugal clutch is in a ride-the-clutch state, increasing the engine revolutional speed to restore engagement of the centrifugal clutch, without causing any perceivable velocity decrease of the vehicle to the rider, also corresponds to suppressing disengagement of the centrifugal clutch. Furthermore, even if connection between the upstream-of-centrifugal-clutch path and the downstream-of-centrifugal-clutch path is temporarily lost, suppression of disengagement of the centrifugal clutch may be envisaged in some cases, i.e., where the engine revolutional speed is increased to restore engagement of the centrifugal clutch before a perceivable velocity decrease of the vehicle to the rider occurs. Suppression of disengagement of the centrifugal clutch may be attained by not only increasing the engine revolutional speed, but also by maintaining the engine revolutional speed, or slowing a decrease in the engine revolutional speed. As compared to any conventional slip adjustment control, the present invention can be said to perform a kind of control which ensures that the clutch is less likely to become disengaged.

Based on the above terminology, the inventors have accomplished a driving force control system as follows, and also a vehicle which is equipped with such a driving force control system.

Hereinafter, with reference to the attached drawings, embodiments of the driving force control system according to the present invention, and straddled vehicles each being one example of a vehicle equipped with the driving force control system, will be described. The present specification will illustrate scooter-type motorcycles as embodiments of straddled vehicles. However, this is only an example. Any motorcycles other than scooter types are also applicable, and 3-wheel motorcycles having three wheels, all-terrain vehicles (ATVs), and the like are also encompassed within straddled vehicles.

In the following description, unless otherwise specified, front, rear, left, and right respectively refer to the front, rear, left, and right as viewed from the rider of the motorcycle. Symbols F, Re, L, and R in the figures respectively represent front, rear, left, and right.

(Embodiment 1)

In the present embodiment, identical component elements will be denoted by identical reference numerals, and any redundant description thereof will be omitted.

First, an overall construction of the motorcycle will be briefly described.

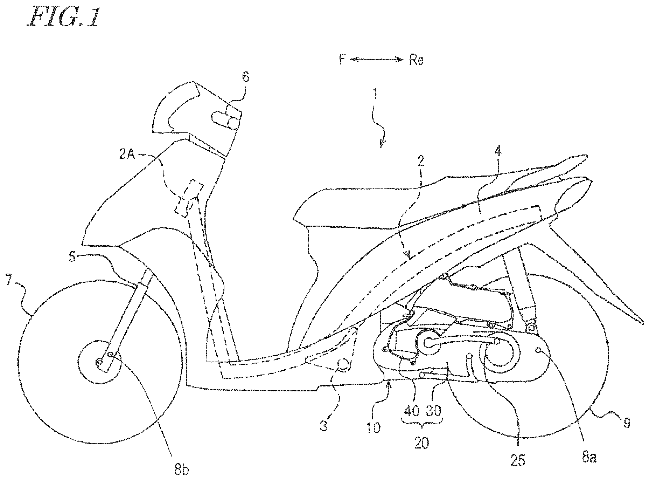

FIG. **1** is a side view showing an outer construction of a scooter-type motorcycle **1** according to the present embodiment.

As shown in FIG. **1**, the motorcycle **1** includes a body frame **2**, a body cover **4**, handle bars **6**, a front wheel **7**, a rear speed sensor **8a**, a front-wheel speed sensor **8b**, a rear wheel **9**, and an engine unit **10**.

The body cover **4** covers the body frame **2** on the sides. The body frame **2** includes a head pipe **2A**. Front forks **5** are supported by the head pipe **2A**. Handle bars **6** are attached above the front forks **5**. At a lower end of the front forks **5**, a front-wheel speed sensor **8b** is provided, and a front wheel **7** is supported. The front-wheel speed sensor **8b** detects a rotation speed which is the wheel speed of the front wheel **7**.

The engine unit **10** is swingingly supported on the body frame **2**, around a pivot axis **3**. At a rear end of the engine unit **10**, a rear-wheel speed sensor **8a** is provided, and a rear wheel **9** is supported. The rear-wheel speed sensor **8a** detects a rotation speed which is the wheel speed of the rear wheel **9**.

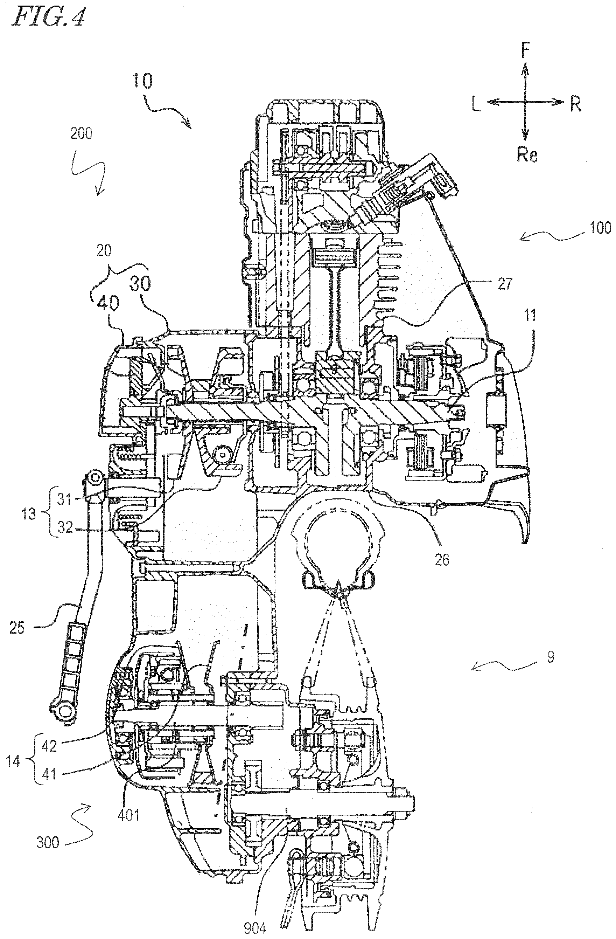

The engine unit **10** includes a transmission case **20**. The transmission case **20** includes a case body **30** which is fixed to a crankcase **26** (FIG. **4**) described below, and a cover **40** which is fixed to the case body **30**. The case body **30** houses a continuously variable transmission (CVT) **200** to be described below. A kick shaft **25** is attached on a side of the transmission case **20**.

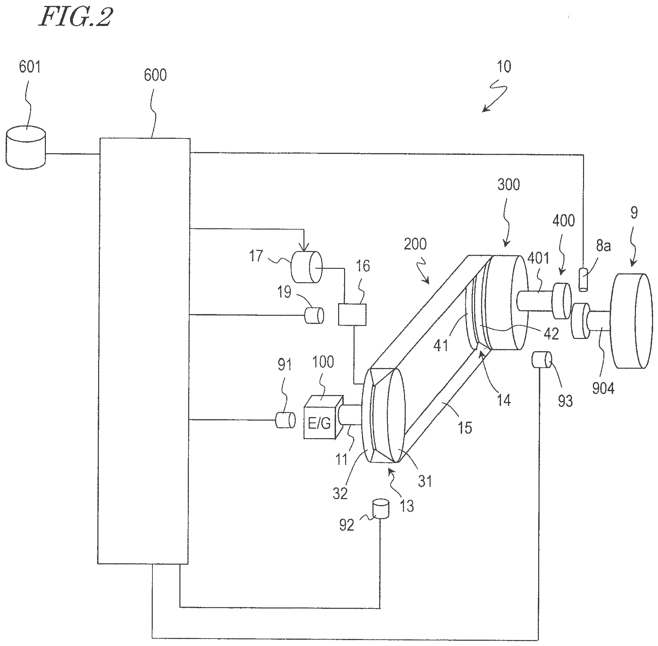

Hereinafter, with reference to FIG. **2**, a detailed construction of the engine unit **10** will be described. Although the present specification illustrates that the engine unit **10** includes the rear wheel **9**, this an example. While including an engine, the engine unit **10** may additionally include any other elements and mechanisms.

FIG. **2** schematically shows a construction of the engine unit **10**.

The engine unit **10** includes an engine **100**, the continuously variable transmission **200**, a centrifugal clutch **300**, a deceleration gear **400**, and the driving wheel (rear wheel) **9**; in this order, a rotary driving force is transmitted from the engine **100** to the driving wheel **9**.

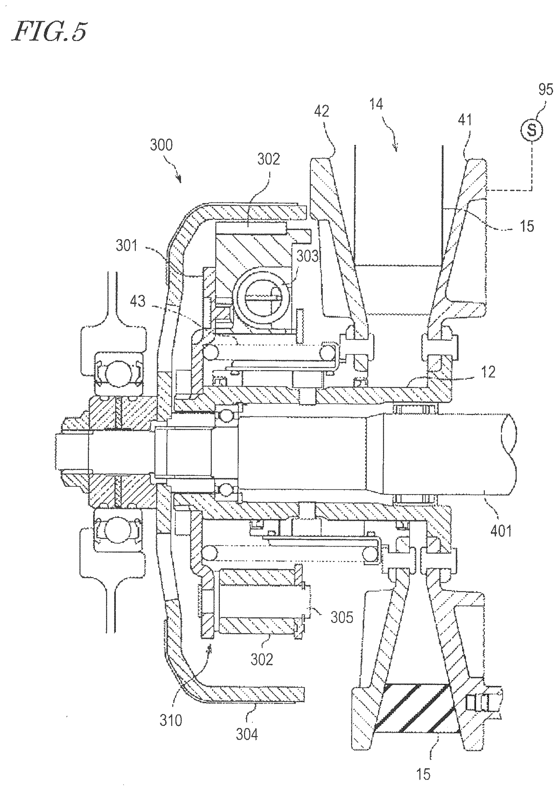

The continuously variable transmission **200** transmits motive power from an output shaft **11** (primary shaft **11**) of the engine **100** to an input shaft of the centrifugal clutch **300**. Generally, the continuously variable transmission **200** includes the primary shaft **11**, a secondary shaft **12** (FIG. **5**, to be described later), a primary sheave **13**, a secondary sheave **14**, and a V belt **15**.

In the present embodiment, the primary shaft **11** is integral with a crank shaft (not shown) of the engine **100**. The secondary shaft **12** is provided in parallel to the primary shaft **11**, and linked to a driving axis **904** of the rear wheel **9**. The secondary shaft **12** is a hollow center axis of the secondary sheave **14**, and defines the input shaft of the centrifugal clutch **300** as shown in FIG. **5** to be described later.

The primary sheave **13** is disposed on the primary shaft **11**, to which output from the engine **100** is transmitted. The secondary sheave **14** is disposed on the input shaft of the centrifugal clutch **300**.

In the present embodiment, the primary sheave **13** and the secondary sheave **14** each include a stationary flange (**31**, **41**) and a movable flange (**32**, **42**), which are attached to their rotation axis (the primary shaft **11** and the secondary shaft **12**). Movement of the movable flange **32** of the primary sheave **13** is controlled by a driving force controller **600**. The stationary flange (**31**, **41**) and the movable flange (**32**, **42**) define a V groove around which the belt is to be wound. The V belt **15** is wound around the V grooves of the primary sheave **13** and the secondary sheave **14**,

6

and transmits rotary driving force between both sheaves (**13**, **14**).

The engine unit **10** further includes a groove width adjustment mechanism **16** and a groove width adjustment actuator **17**. Driven by the groove width adjustment actuator **17**, the groove width adjustment mechanism **16** moves the movable flange **32** of the primary sheave **13** so as to adjust the groove width of the primary sheave **13**. The groove width adjustment actuator **17** is an electric motor, for example. By varying the groove width of the secondary sheave **14** so as to be able to sandwich the V belt **15** in accordance with the groove width of the primary sheave **13**, the belt-type continuously variable transmission **200** changes its transmission ratio.

The centrifugal clutch **300** is attached between the hollow center axis **12** of the secondary sheave **14** (the input shaft of the centrifugal clutch **300** as shown in FIG. **5** to be described later) and a final gear shaft **401** (the output shaft of the centrifugal clutch **300**) which penetrates through the center axis **12.**

The centrifugal clutch **300** will be described in outline. The centrifugal clutch **300**, which is mechanically connected to the engine **100**, includes: a centrifugal clutch upstream member (mainly referred to as a "first mechanism" hereinbelow) which rotates in accordance with rotation of the engine **100**; and a centrifugal clutch downstream member (mainly referred to as a "second mechanism" hereinbelow) which is mechanically connected to the rear wheel **9**. In accordance with the magnitude of a centrifugal force acting on the first mechanism in accordance with revolutional speed of the engine **100**, the first mechanism and the second mechanism are mechanically connected with or disengaged from each other, thereby turning ON or OFF the transmission of rotary driving force from the first mechanism to the second mechanism. Details of the centrifugal clutch **300** will be described later with reference to FIG. **5**, FIG. **6**, and FIG. **7**. Moreover, details of the first mechanism and the second mechanism will be described with reference to FIG. **8**.

The engine unit **10** further includes the driving force controller **600**. The driving force controller **600** is also called an electronic control unit (ECU). The electronic control unit (ECU) can be implemented by, for example, an arithmetic circuit (microcomputer (MPU)) and a primary storage device (memory). From a multitude of sensors that are attached to the vehicle, a multitude of vehicle information is input to driving force controller **600**. A system that includes not only the driving force controller **600** but also various sensors, a spark plug(s), a fuel injector(s), and various actuators to be controlled by the driving force controller **600** is referred to as a driving force control system in the present specification.

Using the vehicle information which is input thereto, the MPU of the driving force controller **600** executes an operation in accordance with a flowchart to be described later. The operation of the driving force controller **600** will be briefly described. Hereinafter, a driving system for transmitting the rotary driving force of the engine **100** to the first mechanism, including the engine **100** and the first mechanism of the centrifugal clutch **300**, will be referred to as a first driving system; and a driving system for transmitting the rotary driving force of the first mechanism to the rear wheel **9**, including the second mechanism and the rear wheel **9**, will be referred to as a second driving system.

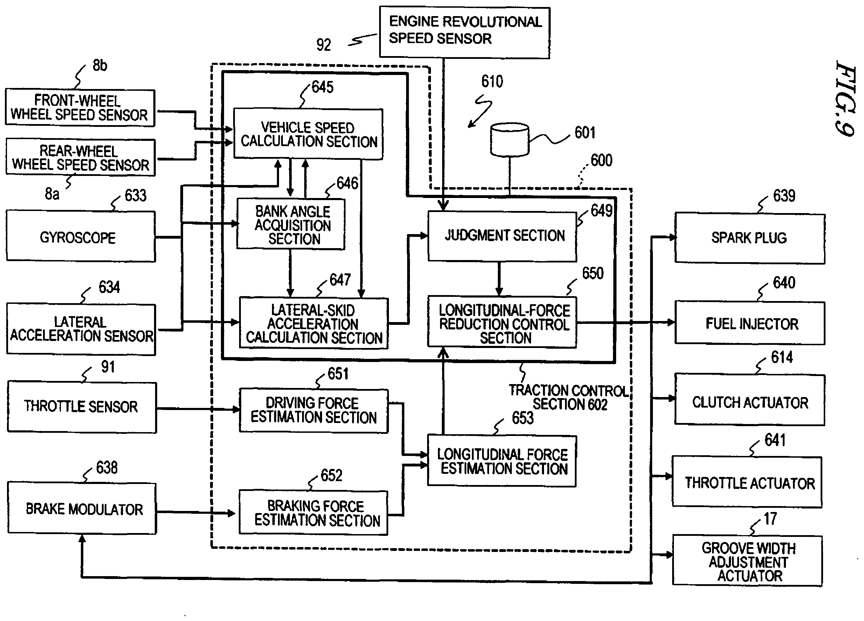

The driving force controller **600** includes a traction control section **602** (FIG. **9**). The traction control section **602** is implemented by the MPU executing a computer program which describes a procedure of processing shown in the flowchart, for example.

From a first sensor which detects a rotation speed of the first driving system and a second sensor which detects a rotation speed of the second driving system, respectively, the traction control section **602** acquires the rotation speed of the first driving system and the rotation speed of the second driving system. Then, if the rotation speed of the first driving system is less than a preset control threshold $\alpha$ and the rotation speed of the second driving system detected by the second sensor is less than a preset control threshold $\beta$, the traction control section **602** suspends the traction control or loosens the traction control. This realizes a kind of straddled vehicle behavior under which the rider is unlikely to feel oddness, as compared to the case where the traction control system is kept activated. Note that the control thresholds $\alpha$ and $\beta$ are stored in the secondary storage device **601.**

The driving force controller **600** further controls the transmission ratio of the continuously variable transmission **200**. For example, based on vehicle information such as vehicle speed and throttle position, the driving force controller **600** may refer to a transmission gear ratio map which is retained in the secondary storage device **601** to vary the transmission ratio of the continuously variable transmission **200**. A transmission gear ratio map is a database to be provided in connection with various travel modes during travel, which defines, for example, a target transmission ratio relationship (which provides a target of control) of the continuously variable transmission **200** on the basis of vehicle speed, engine revolutional speed, and throttle position.

The driving force controller **600** is electrically connected to various sensors to receive signals which are output from the respective sensors, i.e., signals indicating detection results. The detection results from the sensors are utilized as various vehicle information of the motorcycle **1**. Examples of various sensors may include, for example, a flange position detection sensor **19**, a throttle position sensor **91** (TPS), an engine revolutional speed sensor **92**, the wheel speed sensors **8a** and **8b** (FIG. 1), and a vehicle speed sensor **93**. Hereinafter, "throttle position sensor" may be abbreviated as "throttle sensor".

Among the above, the flange position detection sensor **19** detects a position of the movable flange **32**. The throttle sensor **91** detects an accelerator position (throttle position). The engine revolutional speed sensor **92** detects a revolutional speed of the engine. In the present embodiment, the engine revolutional speed sensor **92** detects a rotation speed of the crank shaft (primary shaft **11**).

The rear-wheel speed sensor **8a** detects a rotation speed of the driving axis **904** of the driving wheel **9**, i.e., a rear-wheel speed. The front-wheel speed sensor **8b** (FIG. **1**) detects a front-wheel speed as the vehicle speed of the motorcycle **1**. The vehicle speed sensor **93** detects a rotation speed of the final gear shaft **401** (the output shaft of the centrifugal clutch **300**).

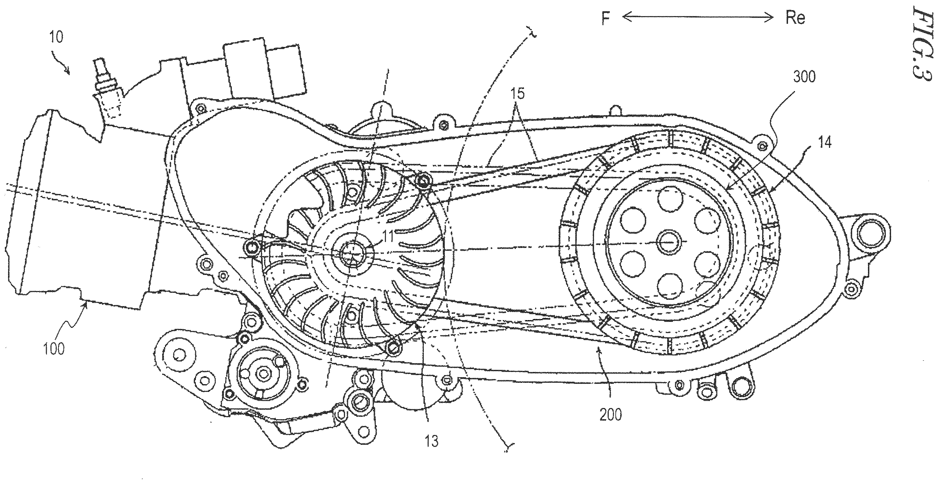

FIG. **3** is an exploded view of the continuously variable transmission **200**. FIG. **3** mainly shows the engine **100**, the continuously variable transmission **200**, and the centrifugal clutch **300**. Their structural relationship will be understood from FIG. **3**.

Next, the structure of the engine unit **10** will be described with reference to FIG. **4**, and thereafter the structure of the centrifugal clutch **300** will be described with reference to FIG. **5**.

FIG. **4** shows a detailed cross section of the engine unit **10**. For ease of understanding, FIG. **4** shows positioning of the engine **100**, the continuously variable transmission **200**, the centrifugal clutch **300**, and the driving wheel **9**.

The engine unit **10** includes the crankcase **26** housing the crank shaft **11**, the continuously variable transmission **200**, and the transmission case **20** housing the continuously variable transmission **200**. The transmission case **20** is disposed on the left of the crankcase **26**. A cylinder **27** is fixed at the front of the crankcase **26**. Rotary driving force of the crank shaft **11** is transmitted to the rear wheel **9** via the continuously variable transmission **200**.

As has been described in connection with FIG. **2**, the continuously variable transmission **200** includes the primary sheave **13** at the engine **100** side and the secondary sheave **14** at the rear wheel side. FIG. **4** shows relative positioning of the stationary flange **31** and the movable flange **32** composing the primary sheave **13**, and the relative positioning of the stationary flange **41** and the movable flange **42** composing the secondary sheave **14**. In order to avoid complexity, the V belt **15** is omitted from illustration. In FIG. **4**, the front half and the rear half of the primary sheave **13** respectively represent states under different transmission ratios (in other words, states under different belt groove widths). The same is also true of the secondary sheave **14**.

The final gear shaft **401** is linked to a rear wheel shaft **904** via a gear mechanism not shown.

FIG. **5** shows a detailed cross section of the centrifugal clutch **300**. FIG. **6** shows a state of the centrifugal clutch **300** while the engine **100** is stopped, and FIG. **7** shows a state of the centrifugal clutch **300** during travel.

As shown in FIG. **5** to FIG. **7**, the centrifugal clutch **300** includes a clutch plate **301**, clutch shoes **302**, clutch springs **303**, and a clutch housing **304** (clutch outer cover) .

As shown in FIG. **5**, the clutch plate **301** is fixedly attached to the center axis **12** of the secondary sheave **14** of the continuously variable transmission **200**. Pins **305** with which to mount the clutch shoes **302** are provided in a manner of protruding from the clutch plate **301**. In the example shown in FIG. **6**, three pins **305** are attached at equal intervals along the circumferential direction. As shown in FIG. **6**, one end of each clutch shoe **302** is attached to a pin **305** that is attached to the clutch plate **301**, so as to permit pivoting. Each clutch spring **303** is mounted so as to link one end of one clutch shoe **302** to another end of a clutch shoe **302** that is adjacent to the one clutch shoe **302** along the circumferential direction. Each clutch spring **303** exhibits an elastic reaction force to pull together one end and the other end of adjacent clutch shoes **302** at all times. The clutch housing **304**, which is a bowl-shaped member, is attached to the final gear shaft **401** penetrating through the hollow center axis **12** of the secondary sheave **14**, so as to provide covering over an assembly **310** of the aforementioned clutch shoes **302**.

While the engine **100** is stopped, as shown in FIG. **6**, the assembly **310** of clutch shoes **302** is reduced in diameter as a whole, due to elastic reaction force of the clutch springs **303**. As a result, the clutch shoes **302** and the clutch housing **304** are not in contact.

When the engine **100** is started, the secondary sheave **14** begins to rotate. With a gradual increase in the revolutional speed of the engine **100**, as shown in FIG. **7**, the resultant centrifugal force causes the assembly **310** of clutch shoes **302** to defy the elastic reaction force of the clutch springs **303**, whereby the assembly **310** of clutch shoes **302** begins to expand in diameter as a whole. As the engine **100** consequently reaches a certain revolutional speed, the clutch shoes **302** come in contact with the clutch housing **304**. Thereafter, a stalled state occurs in which torque is being transmitted while the clutch shoes **302** are slipping against the clutch housing **304**, and then comes a state in which the clutch shoes **302** and the clutch housing **304** are connected due to the frictional force acting between them. As a result, a torque which is in accordance with the frictional force acting between them is transmitted to the final gear shaft **401**. The centrifugal clutch **300** as such is disclosed in, for example, Japanese Laid-Open Patent Publication No. 2006-71096.

As will be understood from the above explanation, the centrifugal clutch **300** achieves clutch engagement/disengagement through contact/non-contact between the clutch shoes **302** and the clutch housing **304**. On account of this structural role, the centrifugal clutch **300** can be generally classified into an upstream-of-centrifugal-clutch path (hereinafter referred to as the "first path") from the engine **100** to the clutch shoes **302**, through which driving force of the engine **100** is transmitted, and a downstream-of-centrifugal-clutch path (hereinafter referred to as the "second path") from the clutch housing **304** to the final gear shaft **401**.

FIG. **8** is a planar and schematic representation of the structure of the engine unit **10**.

As shown in FIG. **8**, the centrifugal clutch **300** can be structurally divided into the first mechanism **300a** and the second mechanism **300b** as mentioned above. The first mechanism **300a** is mechanically connected to the engine **100**, and rotates in accordance with rotation of the engine **100**. On the other hand, the second mechanism **300b** is mechanically connected to the rear wheel **9**. In accordance with the magnitude of a centrifugal force acting on the first mechanism **300a** in accordance with revolutional speed of the engine **100**, the first mechanism **300a** and the second mechanism **300b** are mechanically connected with or disengaged from each other, thereby turning ON or OFF the transmission of rotary driving force from the first mechanism **300a** to the second mechanism **300b**.

Now, a driving system constituting the first path, including the engine **100**, the continuously variable transmission **200,** the first mechanism **300a**, and any driving force transmitting mechanism that provides mechanical connection therebetween, will be referred to as the first driving system **10a**.

Moreover, a driving system constituting the second path, including the second mechanism **300b**, the rear wheel **9**, and any driving force transmitting mechanism that provides mechanical connection therebetween, will be referred to as the second driving system **10b**. The second driving system **10b** allows the rotary driving force which is transmitted from the engine **100** to be transmitted to the rear wheel **9**, thereby driving the motorcycle **1**. Note that the driving force transmitting mechanism as mentioned above may include one or more gears and one or more rotation axes, for example.

The driving force controller **600** (FIG. **2**) receives an output signal from the aforementioned first sensor which detects the rotation speed of the first driving system **10a** and an output signal from the second sensor which detects the rotation speed of the second driving system **10b**, and performs traction control on their basis, thereby controlling the driving force to be supplied to the rear wheel **9**.

The first sensor typically detects the revolutional speed of the engine **100** as a rotation speed of the first driving system **10a**. However, this is an example; the first sensor may be able to detect a rotation speed of any element of the first driving system **10a**. For instance, the first sensor may detect the rotation speed of at least one of the primary shaft **11**, the primary sheave **13**, the secondary sheave **14**, and the first mechanism **300a** of the centrifugal clutch **300**.

Moreover, the second sensor typically detects the rear-wheel rotation speed as a rotation speed of the second driving system **10b**. However, the second sensor may be able to detect a rotation speed of any element of the second driving system **10b**. For example, the second sensor may detect the rotation speed of at least one of the second mechanism **300b** of the centrifugal clutch **300** and the final gear shaft **401**.

When the rotation speed of the first driving system **10a** as detected by the first sensor is less than the preset control threshold $\alpha$ and the rotation speed of the second driving system **10b** as detected by the second sensor is less than the preset control threshold $\beta$, the driving force controller **600** suspends the traction control or loosens the traction control. The details of this process will be described next with reference to FIG. **9** and the subsequent figures.

The present specification illustrates the shoe-type centrifugal clutch **300** with clutch shoes as an example. However, the centrifugal clutch is not limited to a shoe-type. For example, a multi-plate clutch of a centrifugal type is also an example of a centrifugal clutch.

A multi-plate clutch of a centrifugal type relies on the engine torque and engine revolutional speed to automatically realize engagement/disengagement of the multi-plate clutch.

A multi-plate clutch of a centrifugal type includes a plurality of drive plates that rotate together with the crank shaft, to which engine rotation is transmitted. A plurality of pressure plates are provided at positions opposing the drive plates along the axial direction. Furthermore, a multi-plate clutch of a centrifugal type includes a clutch weight(s) which moves in the centrifugal direction depending on the engine revolutional speed to achieve engagement/disengagement between the drive plates and the pressure plates. Separation between the drive plates and the pressure plates corresponds to a state of so-called clutch disengagement. When the engine revolutional speed exceeds a predetermined velocity, the clutch weight(s) moves in the centrifugal direction, whereby the drive plates and the pressure plates come closer together. This allows the rotation of the drive plates to be transmitted to the pressure plates, thus resulting in a state of so-called clutch engagement. As a result of this, driving force of the engine **100** is transmitted to the driving wheel **9**.

The construction of a multi-plate clutch of a centrifugal type can also be divided into a first mechanism **300a** and a second mechanism **300b** as shown in FIG. **8**. Specifically, the drive plates would belong to the first mechanism **300a**. On the other hand, the pressure plates would belong to the second mechanism **300b**. Thus, in the case of adopting a multi-plate clutch of a centrifugal type, a driving system including the engine **100**, the continuously variable transmission **200**, the first mechanism **300a**, and any driving force transmitting mechanism that provides mechanical connection therebetween would define the first driving system **10a**. Similarly, a driving system including the second mechanism **300b**, the rear wheel **9**, and any driving force transmitting mechanism that provides mechanical connection therebetween would define the second driving system **10b**.

FIG. **9** shows functional blocks representing the construction of the driving force control system **610** according to the present embodiment. The driving force control system **610** includes the driving force controller **600**, the secondary storage device **601**, a gyroscope **633**, a lateral acceleration sensor **634**, the front-wheel speed sensor **8b**, the rear-wheel speed sensor **8a**, the throttle sensor **91**, a brake modulator **638**, a vehicle speed calculation section **645**, and a bank angle acquisition section **646**.

The driving force controller **600** includes the traction control section **602**. The traction control section **602** is responsible for traction control of the motorcycle **1**. Traction control broadly means controlling the motive power of the engine. For example, the traction control section **602** may suppress a rear-wheel slip by decreasing the torque of the engine **100**.

In the present specification, stepping up suppression of a rear-wheel slip, so as to make it less likely for a rear-wheel slip to occur, is expressed as "tightening traction control". On the other hand, in a situation where traction control is being performed, stepping down suppression of a rear-wheel slip is expressed as "loosening traction control". In a situation where traction control is being performed, discontinuing suppression of a rear-wheel slip is expressed as "suspending traction control". Note that loosening traction control makes it more likely for a rear-wheel slip to occur.

The inventors have decided to, in a situation where the traction control section **602** is performing traction control, monitor both of the revolutional speed of the engine **100** and the rear-wheel rotation speed, for example, to determine whether or not to continue traction control. For example, in connection with the engine revolutional speed, the control threshold $\alpha$ may be determined based on a value at which the centrifugal clutch **300** becomes disengaged, and a control threshold $\beta$ may be determined based on a rear-wheel speed at which the centrifugal clutch **300** having so far been engaged becomes disengaged. Both of these are values to be defined in the design stage. If the engine revolutional speed and the rear-wheel speed become less than the respective thresholds under traction control, the traction control section **602** suspends the traction control or loosens the traction control, even if there is any remaining rear-wheel slip. This is a control to suppress disengagement of the centrifugal clutch.

The reason for operating the traction control section **602** in this manner is that the engine revolutional speed and the rear-wheel speed at which engagement of the centrifugal clutch **300** is to be lost are known in the design stage. From the information of engine revolutional speed and rear-wheel speed, it can be determined whether the centrifugal clutch having so far been engaged is anywhere near a state where it will be automatically disengaged. Before an automatic disengagement of the centrifugal clutch occurs, the traction control is suspended or loosened so that engagement of the centrifugal clutch **300** will be maintained, i.e., disengagement of the centrifugal clutch will be suppressed. This makes for less oddness to the rider as caused by disengagement of the centrifugal clutch **300**.

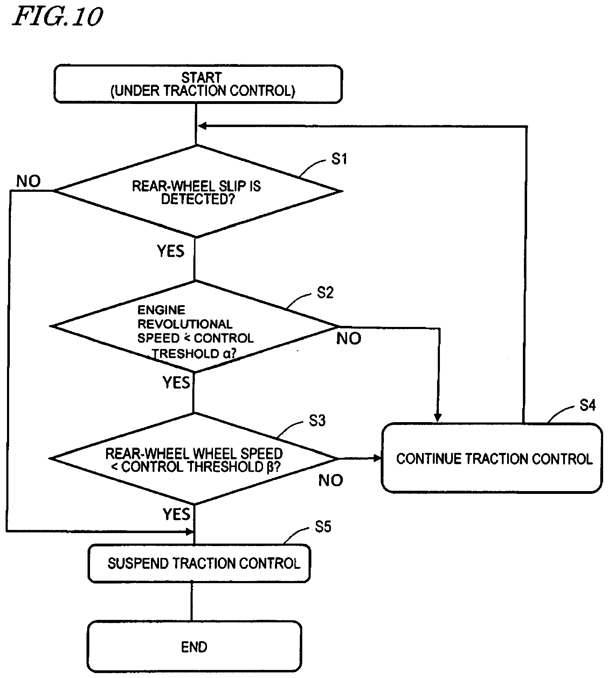

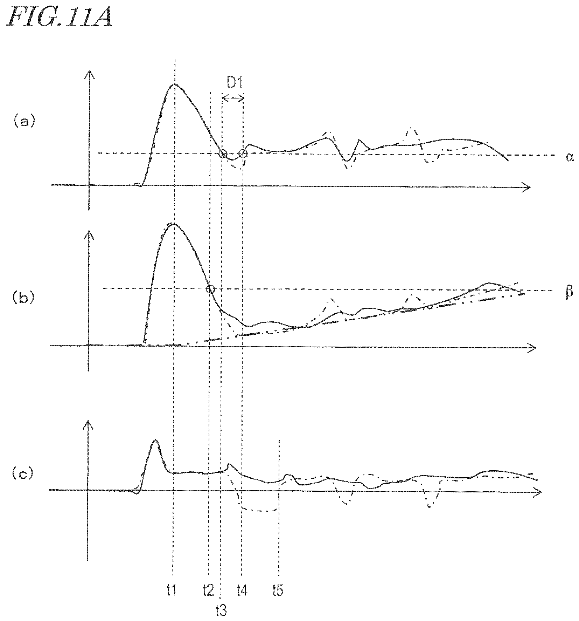

Details of the aforementioned process will be described later with reference to FIG. **10** and FIG. **11A**.

Upon detecting a lateral skid of the front wheel **7** or the rear wheel **9**, the driving force controller **600** reduces the longitudinal force of each wheel. Longitudinal force is a sum of driving force and braking force.

When curving, as the rider steers the handle bars **6** of the motorcycle **1**, the yaw rate of the motorcycle **1** changes. Moreover, as the rider tilts the vehicle body of the motorcycle **1** toward the center of the curve, the roll rate and the bank angle (roll angle) of the motorcycle **1** change. The gyroscope **633** in the present embodiment detects angular velocities along the two axial directions of yaw and roll of the motorcycle **1**. In other words, the gyroscope **633** detects a yaw rate and a roll rate of the motorcycle **1**. The detected angular velocity values along these two axes are sent from the gyroscope **633** to the vehicle speed calculation section **645,** the bank angle acquisition section **646**, and a lateral-skid acceleration calculation section **647**. The vehicle speed calculation section **645** in the present embodiment is able to calculate not only a vehicle speed at the front-wheel tangential point, but also a vehicle speed at the rear-wheel tangential point. In this embodiment, a vehicle speed at the rear-wheel tangential point is determined through the above-described arithmetic operations based on the front-wheel speed, the yaw rate, and the bank angle.

The gyroscope **633** in the present embodiment may function as a yaw rate sensor, and further as a roll rate sensor. In addition to a yaw rate and a roll rate, the gyroscope **633** may be configured to also detect a pitch rate.

The lateral acceleration sensor **634** detects an acceleration in the lateral direction of the vehicle body of the motorcycle **1**. The detected value of lateral acceleration is sent from the lateral acceleration sensor **634** to the bank angle acquisition section **646** in the traction control section **602**. The front-wheel speed sensor **8b** detects a rotation speed of the front wheel **7**. The rear-wheel speed sensor **8a** detects a rotation speed of the rear wheel **9**. The detected rotation speeds of the front wheel **7** and the rear wheel **9** are output to the vehicle speed calculation section **645**.

The throttle sensor **91** detects a position of the throttle. The detected value of throttle position is output to the driving force controller **600**. The brake modulator **638** detects brake pressures on the front wheel brake and the rear wheel brake (neither of which is shown), and adjusts the respective brake pressures. The detected respective brake pressures of the wheels are output to a braking force estimation section **652**.

Next, an exemplary construction of the driving force controller **600** in the present embodiment will be described.

As shown in FIG. **9**, the engine revolutional speed sensor **92**, the gyroscope **633**, the lateral acceleration sensor **634**, the throttle sensor **91**, the brake modulator **638**, the vehicle speed calculation section **645**, and the bank angle acquisition section **646** are connected to the inputs of the driving force controller **600**. To the outputs of the driving force controller **600**, the clutch actuator **614**, the brake modulator **638**, a spark plug **639**, a fuel injector **640**, and a throttle actuator **641** are connected.

The driving force controller **600** includes the traction control section **602**, a driving force estimation section **651**, the braking force estimation section **652**, and a longitudinal force estimation section **653**. The traction control section **602** includes the vehicle speed calculation section **645**, the bank angle acquisition section **646**, the lateral-skid acceleration calculation section **647**, a judgment section **649**, and a longitudinal-force reduction control section **650**.

In connection with the operation according to the present invention, in a situation where traction control is being performed, the judgment section **649** in the traction control section **602** monitors both of the revolutional speed of the engine **100** as output from the engine revolutional speed sensor **92** and the rear-wheel rotation speed as output from the rear-wheel speed sensor **8a**, and determines whether or not to continue traction control.

The judgment section **649** determines whether the rotation speed of the first driving system **10a** (a revolutional speed of the engine as detected by the engine revolutional speed sensor **92**) is less than the preset control threshold $\alpha$ and the rotation speed of the second driving system **10b** (a rear-wheel rotation speed as detected by the rear-wheel speed sensor **8a**) is less than the preset control threshold $\beta$. Based on the results of judgment, the longitudinal-force reduction control section **650** suspends the traction control or loosens the traction control. More specifically, the longitudinal-force reduction control section **650** cancels or loosens the output reducing operation for traction control, which has been performed for at least one among the spark plug **639**, the fuel injector **640**, and the throttle actuator **641**.

Note that the driving force controller **600** may detect the lateral skid of each wheel independently, and perform control to reduce the longitudinal force applied to each wheel when a lateral skid is detected. The description of the present embodiment assumes that longitudinal-force reduction control associated with such lateral skid detection is to be performed. Next, an exemplary operation of determining presence or absence of a lateral skid by the judgment section **649** will be described.

In order to detect a lateral skid of each wheel, in this embodiment, a lateral-skid acceleration is acquired based on the vehicle speed, bank angle, lateral acceleration, and yaw rate of the motorcycle **1**. The vehicle speed calculation section **645** can acquire vehicle speeds of the motorcycle **1** (i.e., the vehicle speed at the front-wheel tangential point and the vehicle speed at the rear-wheel tangential point) through arithmetic operations based on the outputs of the front-wheel speed sensor **8b**, the gyroscope **633**, and the bank angle acquisition section **646**.

Specifically, the vehicle speed V(r) at the rear-wheel tangential point can be determined with the following general formula, by using the yaw rate $\omega^z$ and the bank angle $\phi$.

$$[eq. \quad 1]$$

$$V(r) = \sqrt{V_f^2 - (f(\phi) \cdot \omega_z)^2}$$

Thus, according to the present invention, when there is a difference between the locus of travel **F** of the front wheel **7** and the locus of travel **R** of the rear wheel **9**, such that a difference in vehicle speed occurs between the front-wheel tangential point **f** and the rear-wheel tangential point **r**, this difference in vehicle speed is considered in determining the vehicle speed V(r) at the rear-wheel tangential point **r**. That is, rather than regarding a detected wheel speed $V_f$ of the front wheel **7** intactly as the vehicle speed V, the detected wheel speed $V_f$ of the front wheel **7** is subjected to arithmetic operations to determine a vehicle speed V(r) at the rear-wheel tangential point **r**, and this determined value of the V(r) (estimated value) is subjected to arithmetic operations to determine a slip rate or the like.

Note that, when the yaw rate is substantially zero (when equal to or smaller than a predetermined reference value), the wheel speed $V_f$ of the front wheel may be regarded as the vehicle speed V(r) at the rear-wheel tangential point, without employing the calculation of eq. 1 above.

The vehicle speeds obtained at the vehicle speed calculation section **645** are output to the lateral-skid acceleration calculation section **647**. The "vehicle speed" which is used by the bank angle acquisition section **646** of the present embodiment in making a bank angle estimation does not need to be the vehicle speed at the rear-wheel tangential point, but may instead be the vehicle speed at the front-wheel tangential point. As described earlier, a difference which is in accordance with the yaw rate and the bank angle occurs between the vehicle speed at the rear-wheel tangential point and the vehicle speed at the front-wheel tangential point. Even if this difference is ignored, estimation errors for the bank angle can still be sufficiently small.

To the bank angle acquisition section **646** in the present embodiment, the roll rate of the motorcycle **1** is input from the gyroscope **633**, and also the lateral acceleration of the motorcycle **1** is input from the lateral acceleration sensor **634**. Based on these input values and the "vehicle speed", the bank angle acquisition section **646** determines a bank angle of the motorcycle **1**. The bank angle can be acquired through various methods.

In order to enhance the accuracy of bank angle estimation, an initially estimated value of bank angle may be used for the arithmetic operations to derive a vehicle speed at the rear-wheel tangential point, and the vehicle speed (the vehicle speed at the rear-wheel tangential point) which is obtained through these arithmetic operations may then be used to again estimate a bank angle. By repeating these estimations, the accuracy of estimation can be enhanced.

Based on the detection value of the throttle sensor **37**, the driving force estimation section **651** estimates a driving force which is transmitted to the driving wheel. Since the driving wheel is the rear wheel **9** in the present embodiment, no driving force is transmitted to the front wheel **7**. The driving force of the rear wheel **9** as estimated by the driving force estimation section **651** is output to the longitudinal force estimation section **653**.

Based on the brake pressure detected by the brake modulator **38**, the braking force estimation section **52** estimates the braking force applied to each wheel. The estimated braking force of each wheel is output to the longitudinal force estimation section **653**.

Based on the input driving force and braking force, the longitudinal force estimation section **653** calculates a longitudinal force on each wheel. The calculated longitudinal force acting on each wheel is output to the longitudinal-force reduction control section **650**.

The judgment section **649** makes a comparison to see whether the input lateral-skid acceleration exceeds a predetermined threshold or not. If the lateral-skid acceleration value is equal to or greater than the threshold, it is determined that a lateral skid is occurring at the wheel, and a longitudinal-force reduction control signal to reduce longitudinal force acting on the wheel is output to the longitudinal-force reduction control section **650**.

Based on the judgment signal which is input from the judgment section **649**, the longitudinal-force reduction control section **650** performs control to reduce the longitudinal force acting on each wheel, as input from the longitudinal force estimation section **653**. If the driving force is greater than the braking force, control is performed to decrease the driving force or increase the braking force. If the braking force is greater than the driving force, control is performed to decrease the braking force or increase the driving force.

The present embodiment has illustrated a detailed construction of the driving force control system **610** with reference to FIG. **9**. It should be noted that the construction of the driving force control system **610** shown in FIG. **9**, which is an example, includes component elements that are unrelated to the control according to the present invention.

For example, the component elements that are related to the control according to the present invention include: the rear-wheel speed sensor **8a**, the front-wheel speed sensor **8b** or the vehicle speed sensor **93**, the engine revolutional speed sensor **92**, the vehicle speed calculation section **645**, the judgment section **649**, and the longitudinal-force reduction control section **650**. In other words, the traction control section **602** may include the vehicle speed calculation section **645**, the judgment section **649**, and the longitudinal-force reduction control section **650**. In the case where the lateral-skid acceleration calculation section **647** is not provided, the judgment section **649** at least receives information of the rear-wheel speed from the vehicle speed calculation section **645**.

Note that at least one of the spark plug **639**, the fuel injector **640**, and the throttle actuator **641** may be included as component elements related to the control according to the present invention. While the spark plug **639**, the fuel injector **640**, and the throttle actuator **641** would all be essential to any generic motorcycle **1**, the present embodiment stipulates at least one of them; the reason is that, in the present embodiment, the output reduction for traction control purposes may be cancelled or loosened with respect to at least one of the spark plug **639**, the fuel injector **640**, and the throttle actuator **641**.

The above Embodiment is an example of the present invention. The driving force control according to the present invention may at least include a first sensor to detect a rotation speed of the first driving system, a second sensor to detect a rotation speed of the second driving system, and a control section to perform traction control. This control section may operate so as to suspend the traction control or loosen the traction control when the rotation speed of the first driving system as detected by the first sensor is less than a preset first threshold and the rotation speed of the second driving system as detected by the second sensor is less than a preset second threshold.

FIG. **10** shows a procedure of processing by the traction control section **602** of the driving force controller **600** according to the present embodiment. This process is executed in a situation where the traction control section **602** is performing traction control.

At step **S1**, the traction control section **602** determines whether slipping of the rear wheel **9** has been detected or not. If the traction control section **602** has detected slipping of the rear wheel **9**, the process proceeds to step **S2**; if not, the process proceeds to step **S5**. The latter case means that, thanks to the traction control, slipping of the rear wheel **9** is no longer detected. That is, traction control is no longer necessary.

At step **S2**, the traction control section **602** determines whether the engine revolutional speed is less than the control threshold $\alpha$ or not. If the engine revolutional speed is less than the control threshold $\alpha$, the process proceeds to step **S3**; otherwise (i.e., equal to or greater than the control threshold $\alpha$), the process proceeds to step **S4**.

At step **S3**, the traction control section **602** determines whether the rear-wheel speed is less than the control threshold $\beta$ or not. If the rear-wheel speed is less than the control threshold $\beta$, the process proceeds to step **S5**; otherwise (i.e., equal to or greater than the control threshold $\beta$), the process proceeds to step **S4**.

Step **S4** is executed when the engine revolutional speed is equal to or greater than the control threshold $\alpha$ and/or the rear-wheel speed is equal to or greater than the control threshold $\beta$. At step **S4**, the traction control section **602** continues traction control. The process returns to step **S1**. Although step **S4** is not meant to illustrate the traction control section **602** as performing any special operation, it is nonetheless shown as a step, in order to clarify this operation in its relationship with the process of step **S5** to be described next.

At step **S5**, the traction control section **602** suspends the traction control. Instead of suspending the traction control, the traction control section **602** may loosen the traction control.

In the above example, the control threshold $\alpha$ to be preset in relation to the engine revolutional speed is, for example, an engine revolutional speed at which the centrifugal clutch **300** engages, which can be known in advance by design. On the other hand, the control threshold $\beta$ to be preset in connection with the rear-wheel speed is, for example, a velocity per hour at which the centrifugal clutch being currently in an engaged state becomes disengaged, which can be known in advance by design.

Note that values other than the aforementioned engine revolutional speed or the velocity per hour at which the centrifugal clutch becomes disengaged by design may also be adopted as control thresholds. For example, a value which is greater than the engine revolutional speed at which the centrifugal clutch **300** engages may be adopted as the control threshold $\alpha$. Alternatively, a value which is higher than the engine revolutional speed at which the first mechanism **300a** and the second mechanism **300b** having so far been connected become disengaged may be adopted as the control threshold $\beta$. The reason for setting such a control threshold(s) $\alpha$ and/or $\beta$ is to account for a response lag of the engine, or slight differences in time between changes in the engine revolutional speed and changes in the rear-wheel speed.

FIG. **11A**, **(a)** to **(c)**, shows an instance of traction control activation by the traction control section **602**. FIG. **11A(a)** shows example waveforms of the engine revolutional speed of the motorcycle **1** and the control threshold $\alpha$; FIG. **11A(b)** shows example waveforms of the rear-wheel speed and the control threshold $\beta$; and FIG. **11A(c)** shows example waveforms of the longitudinal acceleration.

Among the waveforms, a solid line represents an example waveform when traction control by the traction control section **602** is active. Hereinafter, any solid-line waveform will be referred to as an "example waveform according to the present invention". On the other hand, a dot-dash line represents an example waveform when conventional traction control is active. Hereinafter, any such waveform will be referred to as an "example conventional waveform". Note that FIG. **11A(b)** also shows a waveform indicated by a chain double-dashed line, which represents the front-wheel speed.

With reference to FIG. **11A**, example waveforms according to the present invention will be described. In addition, differences from the example conventional waveforms will be described. For convenience of description, an example will be illustrated below where the traction control section **602** suspends the traction control. It must be noted that this is not to exclude examples where the traction control is loosened.

First, look at the rear-wheel speed. Immediately before time **t1**, the difference between the rear-wheel speed and the front-wheel speed drastically increases. This means that the rear wheel **9** is slipping. At time **t1**, where the difference between the rear-wheel speed and the front-wheel speed has become equal to or greater than a predetermined level, the traction control section **602** begins traction control. At this point in time, the traction control section **602** executes the process shown in the flowchart of FIG. **10**. At time **t1**, the engine revolutional speed is equal to or greater than the control threshold $\alpha$, and the rear-wheel speed is equal to or greater than the control threshold $\beta$.

Note that, even if traction control is begun, due to the inertia of the rotating engine and wheel, there will be some lag before the engine revolution value or wheel speed actually shows a decreasing tendency. Time **t1** is exemplified as a point of time at which the engine revolution value or wheel speed exhibits a decreasing tendency.

At time **t2**, the engine revolutional speed is still equal to or greater than the control threshold $\alpha$, but the rear-wheel speed becomes less than the control threshold $\beta$. At this point in time, the traction control section **602** executes the processes from step **S2** to step **S4** in FIG. **10**. As a result, traction control is still continued.

Thereafter, at time **t3**, the engine revolution becomes less than the control threshold $\alpha$. The rear-wheel speed continues to be less than the control threshold $\beta$. The traction control section **602** executes the processes of step **S2** and **S3**, and then step **S5**, in FIG. **10**. As a result, the traction control section **602** suspends the traction control.

With suspension of traction control, the engine revolutional speed increases. Section **D1** from times **t3** to **t4** depicts an increasing engine revolutional speed. Moreover, decrease in the rear-wheel speed is also alleviated.

At time **t4**, the engine revolutional speed begins to be equal to or greater than the control threshold $\alpha$. At time **t4**, the difference between the rear-wheel speed and the front-wheel speed has become so small that traction control is unnecessary. Moreover, the longitudinal acceleration of the motorcycle **1** maintains a positive value without decreasing much. In other words, any decrease in the driving force that is associated with traction control is being suppressed. As a result, occurrence of any vehicle behavior that is unintended by the rider is reduced, whereby a kind of vehicle behavior is realized under which the rider is unlikely to feel oddness.

Now, look at the example conventional waveform (the dot-dash line in FIG. **11A**). Until time **t3**, it is the same as the example waveform according to the present invention. At time **t3**, traction control is suspended in the example waveform according to the present invention, whereas traction control is continued in the conventional control method. Therefore, the engine revolutional speed in the example conventional waveform (FIG. **11A(a)**) decreases more rapidly than the engine revolutional speed in the example waveform according to the present invention. Moreover, the rear-wheel speed in the example conventional waveform (FIG. **11A(b)**) decreases more rapidly than the rear-wheel speed in the example waveform according to the present invention, and approaches the front-wheel speed. The result manifests itself in the longitudinal acceleration (FIG. **11A(c)**): specifically, after time **t3** until time **t5**, the longitudinal acceleration in the example conventional waveform takes negative values.

Presumably, the rider will feel oddness because of this. The oddness will continue until the acceleration becomes positive at time **t5**.

It has been confirmed above that oddness to the rider can be reduced by the operation the traction control section **602** according to the present embodiment.

In the aforementioned control, it is also possible to explain the operation of the traction control section **602** as follows, by paying attention to the relationship between the rotation speed of the upstream member of the centrifugal clutch **300** and the rotation speed of the downstream member.

FIG. **11B**, **(a)** to **(d)**, shows example waveforms according to the present invention, paying attention to the rotation speed of the centrifugal clutch **300.**

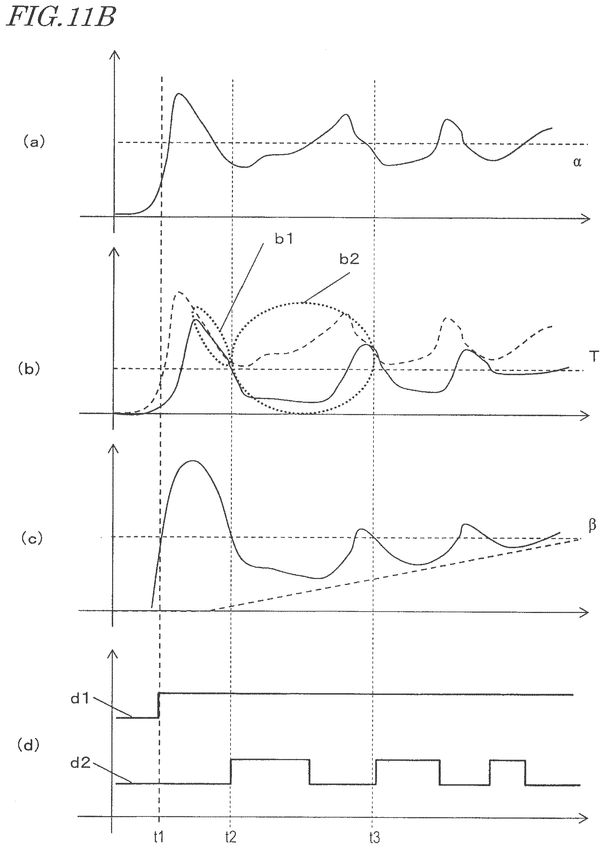

FIG. **11B(a)** shows an example waveform of the engine revolutional speed of the motorcycle **1** and the control threshold $\alpha$.

FIG. **11B(b)** shows an example waveform of the rotation speed of the centrifugal clutch **300**. A broken line represents an example waveform of the rotation speed of the upstream member of the centrifugal clutch **300,** whereas a solid line represents the rotation speed of the downstream member of the centrifugal clutch **300**. A threshold **T** is the rotation speed at which engagement between the upstream member and the downstream member of the centrifugal clutch **300** is lost. Note that, even when the rotation speed of the upstream member of the centrifugal clutch **300** is less than the threshold **T**, the upstream member and the downstream member may be in a so-called ride-the-clutch state in a certain situation. This is a situation where the rotation speed of the upstream member is on an increase, such that the disengaged upstream member and downstream member may soon reengage. Note that there are cases where the upstream member and the downstream member of the centrifugal clutch **300** are in contact (i.e., not completely disengaged) even when the rotation speed of the upstream member is less than the threshold **T**.

FIG. **11B(c)** shows example waveforms of the respective wheel speeds of the front wheel and rear wheel and the control threshold $\beta$. A broken line represents the front-wheel speed, whereas a solid line represents the rear-wheel speed.

FIG. **11B(d)** shows waveforms of control flags which indicate suspension or activation of traction control. The control flag **d1** indicates whether traction control is to be universally turned ON or OFF. The control flag **d1** goes ON at time **t1** when the difference between the rear-wheel speed and the front-wheel speed (vehicle speed) becomes equal to or greater than a predetermined value, whereby traction control begins to be activated.

Even if the control flag **d1** goes ON to begin traction control, as respectively shown in **(a)** to **(c)** of FIG. **11B**, the engine revolutional speed, the rotation speed of the upstream member of the centrifugal clutch **300** (broken line), and the rear-wheel speed (solid line) keep increasing even after the start of traction control; this is because of the inertia of the rotating engine and wheel. A lag exists until the engine revolution value, the upstream member of the centrifugal clutch **300**, and the rear-wheel speed actually exhibit a decreasing tendency, i.e., until traction control actually functions.

On the other hand, in a situation where traction control is ON, the control flag **d2** goes ON (i.e., rises) when the rear-wheel speed becomes less than the control threshold $\beta$, and goes OFF (i.e., falls) when the rear-wheel speed becomes equal to or greater than the control threshold $\beta$. The control flag **d2** indicates that traction control is temporarily suspended while it is ON, and that traction control is activated while it is OFF.

Now, look at the section from times **t1** to **t2** in FIG. **11B(b)**. In portion **b1** in the example waveform of FIG. **11B(b)**, the solid line and the broken line substantially overlap. This means that the upstream member and the downstream member of the centrifugal clutch **300** are engaged, so that their rotation speeds are equal. It can further be seen that the rotation speed is decreasing at portion **b1**. This is due to a decrease in the engine revolution shown in **(a)**, which in turn is a result of traction control being active. Consequently, the driving force that is transmitted to the rear wheel 9 (which is the driving wheel) also decreases, thereby decreasing the rear-wheel speed as indicated with a solid line in **(c)**.

Next, look at the section from times **t2** to **t3** in FIG. **11B(b)**. At time **t2**, the rear-wheel speed becomes less than the control threshold $\beta$, whereby a control flag **b2** shown in **(d)** rises. As a result, traction control is temporarily suspended, and the engine revolutional speed shown in **(a)** increases, and as indicated at portion **b2** in the example waveform of **(b)**, a difference emerges between the rotation speed of the upstream member of the centrifugal clutch **300** (broken line) and the rotation speed of the downstream member (solid line).

The centrifugal clutch **300** transitions from engagement, via a so-called ride-the-clutch state, to disengagement. The point in time at which a difference emerges between the rotation speed of the upstream member of the centrifugal clutch **300** (broken line) and the rotation speed of the downstream member (solid line) corresponds to a ride-the-clutch state. Since the rotation speed of the upstream member is above the threshold **T**, engagement between the upstream member and the downstream member is not completely lost.

Note that, even if engagement of both members is completely lost, before any perceivable velocity decrease of the vehicle to the rider occurs, the engine revolutional speed may be increased so that the upstream member and the downstream member become engaged.

Time **t3** represents a point of time of returning to the state where the rotation speed of the upstream member and the rotation speed of the downstream member of the centrifugal clutch **300** are equal.

To analyze the behavior in portions **b1** and **b2**, it may be said that the traction control section **602** is exerting control so that, in a state where the rear wheel **9** (which is the driving wheel) is slipping, a reduction rate (A) under non-connection concerning the upstream-of-centrifugal-clutch path is smaller than a reduction rate (B) under connection concerning the upstream-of-centrifugal-clutch path.

The "reduction rate (A) under non-connection concerning the upstream-of-centrifugal-clutch path" is a reduction rate in the rotation speed of the upstream-of-centrifugal-clutch path when a difference exists between the rotation speed of the upstream member and the rotation speed of the downstream member of the centrifugal clutch **300** (i.e., at time **t2** and afterwards). The "reduction rate (B) under connection concerning the upstream-of-centrifugal-clutch path" is a reduction rate in the rotation speed of the upstream-of-centrifugal-clutch path when the rotation speed of the upstream member and the rotation speed of the downstream member of the centrifugal clutch **300** are equal before a difference emerges between the rotation speed of the upstream member and the rotation speed of the downstream member of the centrifugal clutch **300** (i.e., before time **t2**).

As used in the above explanation, the "difference" between the rotation speed of the upstream member and the rotation speed of the downstream member of the centrifugal clutch **300**, as well as the rotation speed of the upstream member and the rotation speed of the downstream member of the centrifugal clutch **300** being "equal", will be described more specifically.

First, being "equal" means, besides being completely equal, there being a deviation without complete equality, with an amount of deviation falling within a predetermined tolerable range. Generally speaking, even at an engine revolutional speed at which the centrifugal clutch can be regarded as completely engaging by design, some deviation (difference) may exist between the rotation speed of the upstream member and the rotation speed of the downstream member of the centrifugal clutch **300**. The aforementioned state of being "equal" may be recognized notwithstanding the presence of the same level of difference as such a difference.

On the other hand, "difference" means a state of being different beyond what would be regarded as "equal" as defined above, or, there being a difference such that, by design, the upstream member and the downstream member of the centrifugal clutch **300** are regarded as not being engaged (i.e., unconnected).

The aforementioned "reduction rate" can be determined in terms of waveform, as the gradient of a waveform in portion **b1** or **b2**.

Although FIG. **11B(b)** illustrates the range of portion **b2** in which to calculate the above reduction rate (A) under non-connection concerning the upstream-of-centrifugal-clutch path is from time **t2** to time **t3**, this is an example. The aforementioned reduction rate (A) under non-connection may be calculated by utilizing the rotation speed of the upstream member of the centrifugal clutch **300** at time **t2** and the rotation speed of the upstream member at any point of time earlier than time **t3**.

Note that the each reduction rate mentioned above is a value obtained by measuring the rotation speed of the clutch upstream member and the rotation speed of the clutch downstream member when a slip is allowed to occur while keeping a constant accelerator position, for example. Each reduction rate similarly referred to in Embodiments 2 and 3, to be described later, is also a value obtained by the same method of measurement. The method of measurement may be various. Any method of measurement other than the aforementioned method may also be used.

There may be various time stipulations for determining whether or not the condition is met that: in a state where the rear wheel **9** (which is the driving wheel) is slipping, the reduction rate (A) under non-connection concerning the upstream-of-centrifugal-clutch path is smaller than the reduction rate (B) under connection concerning the upstream-of-centrifugal-clutch path.

For example, a reduction rate (A) under non-connection may be calculated over the entire period under non-connection of the centrifugal clutch **300**, in order to determine whether the above condition is met or not. Alternatively, in order to make the determination, a reduction rate (A) under non-connection may be calculated at least under non-connection, instead of over the entire period under non-connection. By "under non-connection", any point in time under an unconnected state is meant. When a start point and an end point of an "unconnected state" are to be envisaged, the start point is a point of time at which the centrifugal clutch **300** becomes disengaged. On the other hand, the end point is a point of time after a predetermined amount of time has elapsed since the point of time of entering the unconnected state, after which that state was maintained, for example. Alternatively, the end point is a point of time at which, although the centrifugal clutch **300** is in an unconnected state, the rate of increase of the engine revolutional speed or like conditions indicate that the centrifugal clutch **300** is to be engaged.

Similarly, a reduction rate (B) under connection concerning the upstream-of-centrifugal-clutch path may be calculated over the entire period under connection, or calculated at least under connection, instead of over the entire period. By "under connection", any point in time under a connected state is meant. When a start point and an end point of a "connected state" are to be envisaged, the start point may be a point of time at which a so-called ride-the-clutch state is entered, or a point of time at which the engine rotates at a revolutional speed which by design indicates that the centrifugal clutch **300** is to be engaged. The end point may be a point of time at which an engaged state transitions to a ride-the-clutch state, or a point of time at which the engine rotates at a revolutional speed which by design indicates that the centrifugal clutch **300** is to be disengaged.

In the present invention, the driving force control system **610** according to the present invention adjusts slipping of the driving wheel so that, when the aforementioned reduction rate (A) under non-connection and reduction rate (B) under connection are calculated "under non-connection" and "under connection" as mentioned above, the aforementioned condition is satisfied.

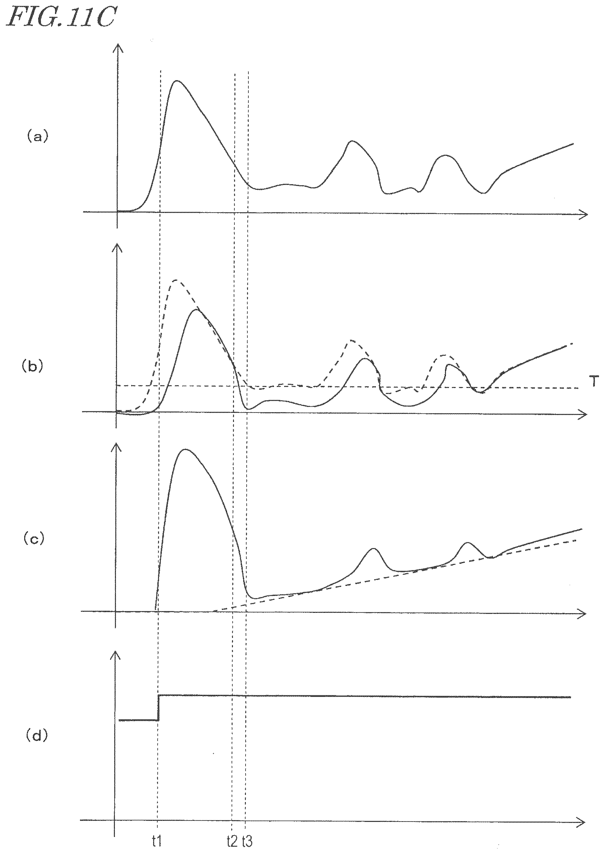

Next, as a comparative example against the control under the present invention, an example waveform under a control which has conventionally been performed will be described with reference to FIG. **11C**.

FIG. **11C**, **(a)** to **(d)** show example conventional waveforms, paying attention to the rotation speed of the centrifugal clutch.

FIG. **11C(a)** shows an example waveform of the engine revolutional speed.

FIG. **11C(b)** shows example waveforms of the clutch rotation speed. A broken line represents an example waveform of the rotation speed of the upstream member of the centrifugal clutch, whereas a solid line represents an example waveform of the rotation speed of the downstream member of the centrifugal clutch **300**. A threshold **T** is the rotation speed at which engagement between the upstream member and the downstream member of the centrifugal clutch is completely lost. As has been described in connection with FIG. **11B(b)**, it must be noted that there are cases where the upstream member and the downstream member of the centrifugal clutch **300** are in contact (not completely disengaged) even when the rotation speed of the upstream member is less than the threshold **T**.

FIG. **11C(c)** shows example waveforms of the respective wheel speeds of the front wheel and rear wheel. A broken line represents the front-wheel speed, whereas a solid line represents the rear-wheel speed.

FIG. **11C(d)** shows a waveform of a control flag which indicates suspension or activation of traction control. This control flag indicates whether traction control is to be universally turned ON or OFF.

Time **t1** is identical to time **t1** in FIG. **11B**.

Time **t2** is a point of time at which a difference emerges between the rotation speed of the upstream member and the rotation speed of the downstream member of the centrifugal clutch.

Time **t3** is a point of time at which the difference between the front-wheel speed and the rear-wheel speed is eliminated, i.e., a state where the driving wheel is no longer slipping.

In FIG. **11B(b)**, look at the broken line before and after time **t2**. The gradient of the broken line up to time **t2** corresponds to the aforementioned reduction rate (B) under connection concerning the upstream-of-centrifugal-clutch path. The gradient of the broken line after time **t2** corresponds to the aforementioned reduction rate (A) under non-connection concerning the upstream-of-centrifugal-clutch path.

As will be understood from the gradients of the broken line before and after time **t2** in FIG. **11B(b)**, the reduction rate (A) under non-connection concerning the upstream-of-centrifugal-clutch path and the reduction rate (B) under connection concerning the upstream-of-centrifugal-clutch path are equal. In the conventional control example, the determination of whether to suspend or continue intervention by traction control is made based on whether slipping of the driving wheel has been eliminated or not, which is unrelated to the threshold **T**, i.e., the rotation speed at which engagement between the upstream member and the downstream member of the centrifugal clutch is completely lost. This is the cause for the oddness to the rider due to disengagement of the centrifugal clutch. It can be said that the concept of ensuring a difference between the aforementioned reduction rate (A) under non-connection and the reduction rate (B) under connection never existed before.

(Embodiment 2)

Embodiment 1 has illustrated an example where, in a situation where traction control is being performed, both of the engine revolutional speed and the rear-wheel speed are checked to suspend the traction control. This operation amounts to canceling traction control and permitting slips. This may mean that the slip suppression performance of the motorcycle 1 could even be further enhanced while reducing oddness to the rider.

Accordingly, the present embodiment illustrates an operation of restarting traction control after suspending traction control, and conditions therefor. The structure and functional blocks of the motorcycle are the same as in Embodiment 1, and their description will not be repeated.

The traction control section **602** detects the rotation speed of an element in the first driving system **10a**, and further detects a value concerning an amount of change thereof. The "value concerning an amount of change of the rotation speed" of the first driving system **10a** may be a differential value or a difference value of the rotation speed of the first driving system **10a**. Alternatively, it may be a ratio between the rotation speeds before and after a change. In the case of utilizing the latter ratio, a ratio of the post-change rotation speed to the pre-change rotation speed may be determined, and if the ratio is greater than 1, the rotation speed may be seen as increasing. A control threshold may be provided corresponding to that ratio, and the traction control which is currently suspended may be restarted when the rotation speed changes to become equal to or greater than the control threshold.

The above illustration assumes that a rotation speed and a differential value are to be detected for the same element. However, a rotation speed and a differential value may be detected for different elements. It suffices if the rotation speed and/or differential value of any element(s) (driving force transmitting mechanism) in the first driving system 10a is detected.

The present embodiment assumes that the traction control section 602 computes a differential value of engine revolutional speed.

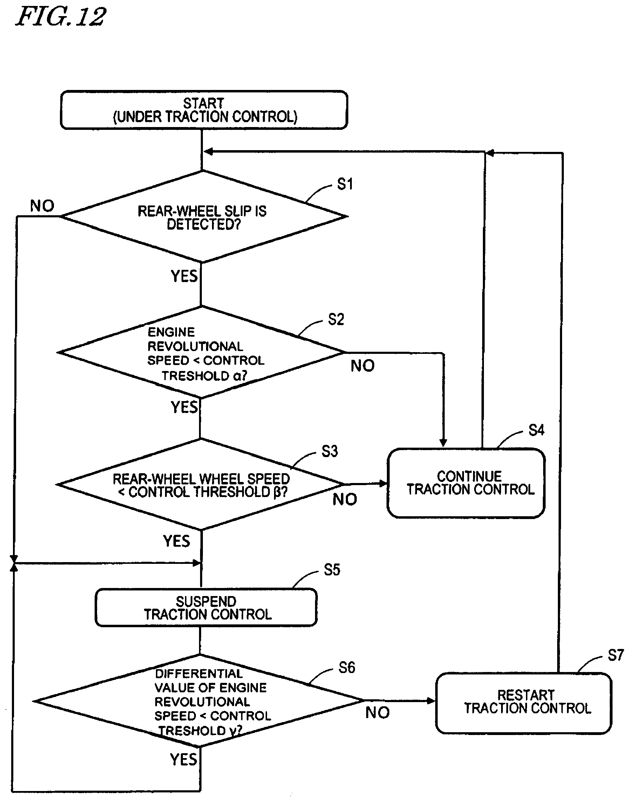

FIG. 12 is a procedure of processing by the traction control section 602 according to the present embodiment.

Steps S1 to S5 are identical to those in FIG. 10, and their description will not be repeated. Hereinafter, steps S6 and S7 will be described. Note that step S6 is a process to be performed during suspension of traction control by step S5.

At step S6, the traction control section 602 computes a differential value of engine revolutional speed. For example, the differential value is obtained by allowing a difference between an engine revolutional speed at a given point of time and a revolution after the lapse of a predetermined time since the given point of time to be divided by that predetermined time.

The traction control section 602 determines whether the differential value is less than a control threshold $\gamma$ or not. If the differential value is less than the control threshold $\gamma$, the process returns to step S5. An example of this condition is where the engine revolutional speed has not increased, or the increase in the rotation speed is smaller than a predetermined level.

On the other hand, if the differential value is equal to or greater than the control threshold $\gamma$, the process proceeds to step S7. An example of this condition is where the rotation speed has increased to be equal to or greater than a predetermined level, i.e., equal to or greater than the control threshold $\gamma$.

At step S7, the traction control section 602 restarts traction control. That is, the traction control section 602 decreases the revolutional speed of the engine 100 to suppress torque.

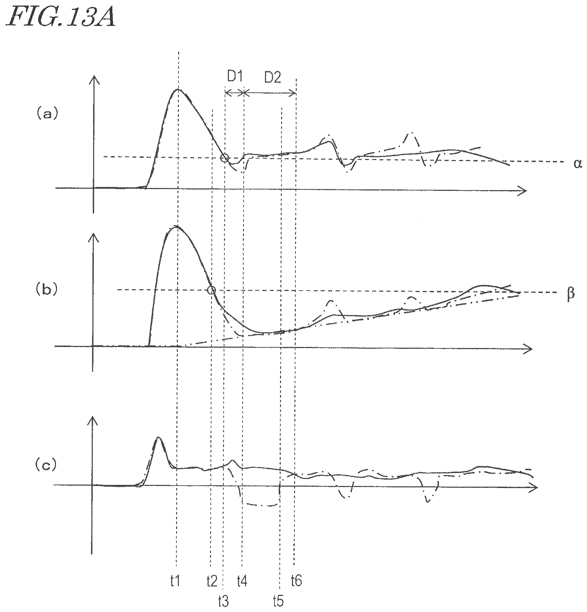

FIG. 13A, (a) to (c), shows an instance of traction control activation according to the present embodiment. Illustration of FIG. 13A conforms to the illustration of FIG. 11A. That is, FIG. 13A(a) shows example waveforms of the engine revolutional speed of the motorcycle 1 and the control threshold $\alpha$; FIG. 13A(b) shows example waveforms of the rear-wheel speed and the control threshold $\beta$; and FIG. 13A(c) shows example waveforms of the longitudinal acceleration. Among the waveforms, a solid line represents an example waveform when traction control by the traction control section 602 is active ("example waveform according to the present invention"). A dot-dash line represents an example waveform when conventional traction control is active ("example conventional waveform"). A chain double-dashed line in FIG. 13A(b) represents the front-wheel speed. Since the waveform of FIG. 13A does not depict a waveform of a differential value of engine revolutional speed, the control threshold $\gamma$ is not shown.

As has been described in Embodiment 1, the traction control section 602 suspends the traction control at time t3. Thereafter, in section D1 from times t3 to t4, the engine revolutional speed begins to increase. Assume, for example, that the differential value of the engine revolutional speed becomes equal to or greater than the control threshold $\gamma$ at time t4.

The traction control section 602 restarts traction control from time t4. Section D2 in FIG. 13A shows a waveform after traction control is restarted. This is to be contrasted against FIG. 11A. After time t4, the rear-wheel speed does not become equal to the front-wheel speed and thus a slip is occurring in the example of FIG. 11A(b); in the example of FIG. 13A(b), however, the rear-wheel speed becomes equal to the front-wheel speed and thus no slip is occurring. In other words, traction control is active. In the present embodiment, a condition for restarting once-suspended traction control is set in accordance with an increase in the engine revolutional speed. This method allows traction control to restart more rapidly than under the usual condition of restarting traction control based on a rear-wheel slip. Stated otherwise, traction control can be restarted based on a prediction that the centrifugal clutch 300 will engage.

Under the control according to the present embodiment, as indicated by the waveform of the longitudinal acceleration in FIG. 13A(c), the longitudinal acceleration does not become negative through the operation of the present embodiment, either. Although there is a longer period of performing traction control than in the control example of Embodiment 1, the longitudinal acceleration of the motorcycle 1 still keeps positive, i.e., deceleration does not occur. Similarly to Embodiment 1, the present embodiment also reduces oddness felt by the rider.

The control according to the present embodiment is able to restart traction control by predicting that the centrifugal clutch 300 of the motorcycle 1 will engage, and thus the period of performing traction control can be increased relative to the control according to Embodiment 1 above. This reduces the amount of time during which slipping is permitted. As a result, the slip suppression performance can be more enhanced.

Similarly to Embodiment 1, with respect to the control according to the present embodiment, it is also possible to explain the operation of the traction control section 602 as follows, by paying attention to the relationship between the rotation speed of the upstream member of the centrifugal clutch 300 and the rotation speed of the downstream member.

FIG. 13B, (a) to (d), shows example waveforms according to the present invention, paying attention to the rotation speed of the centrifugal clutch 300.

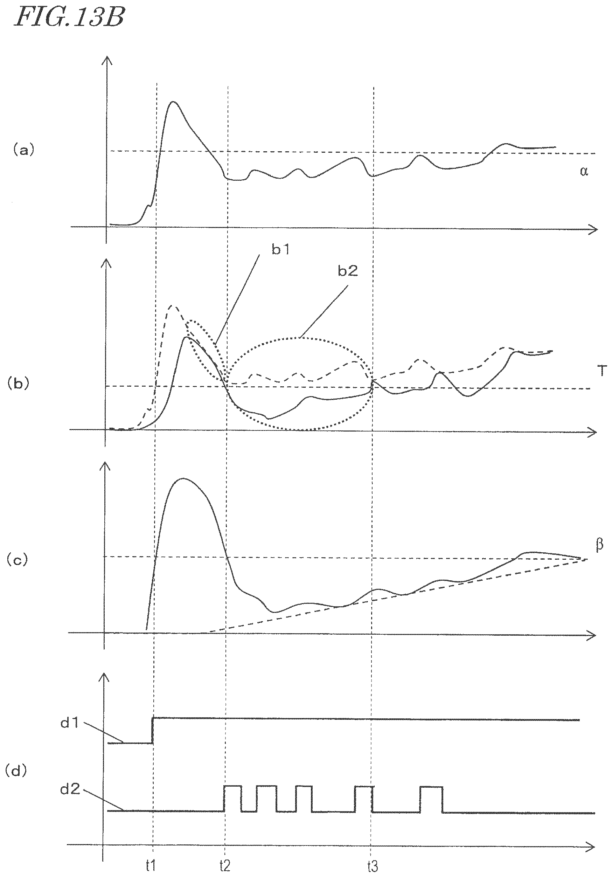

FIG. **13B(a)** shows an example waveform of the engine revolutional speed and the control threshold $\alpha$.

FIG. **13B(b)** shows example waveforms of the clutch rotation speed. A broken line represents an example waveform of the rotation speed of the upstream member of the centrifugal clutch **300**, whereas a solid line represents an example waveform of the rotation speed of the downstream member of the centrifugal clutch **300**. A threshold **T** is a rotation speed at which engagement between the upstream member and the downstream member of the centrifugal clutch **300** is completely lost. As has been described in connection with FIG. **11B(b)** in Embodiment 1, it must be noted that there are cases where the upstream member and the downstream member of the centrifugal clutch **300** are in contact (not completely disengaged) even when the rotation speed of the upstream member is less than the threshold **T**.

FIG. **13B(c)** represents example waveforms of the respective wheel speeds of the front wheel and rear wheel and the control threshold $\beta$. A broken line represents the front-wheel speed, whereas a solid line represents the rear-wheel speed.

FIG. **13B(d)** shows waveforms of control flags which indicate suspension or activation of traction control. The control flag **d1** indicates whether traction control is to be universally turned ON or OFF. The control flag **d1** goes ON at time **t1** when the difference between the rear-wheel speed and the front-wheel speed (vehicle speed) becomes equal to or greater than a predetermined value, whereby traction control begins to be activated.

Even if the control flag **d1** goes ON to begin traction control, the engine revolutional speed, the rotation speed of the upstream member of the centrifugal clutch **300** (broken line), and the rear-wheel speed (solid line) keep increasing even after the start of traction control; this is because of the inertia of the rotating engine and wheel, as has been described with reference to FIG. **11B**.

On the other hand, the control flag **d2** indicates that traction control is temporarily suspended while it is ON, and that traction control is activated while it is OFF.

In a situation where traction control is ON, it goes ON (i.e., rises) when the rear-wheel speed becomes less than the control threshold $\beta$. This causes the traction control to be temporarily suspend. In this situation, in accordance with a differential value of the engine revolutional speed, traction control is restarted again (step **S6** in FIG. **12**). Because of this additional condition, the control flag **d2** in FIG. **13B(d)** repeats temporary suspension and restart of traction control more often than does the control flag **d2** in FIG. **11B(d)** according to Embodiment 1.

As has been described in connection with Embodiment 1, it can be said that similar control to that of Embodiment 1 is being performed in the present embodiment. That is, the traction control section **602** is exerting control so that, in a state where the rear wheel **9** (which is the driving wheel) is slipping, the reduction rate (A) under non-connection concerning the upstream-of-centrifugal-clutch path in portion **b2** of FIG. **13B(b)** is smaller than the reduction rate (B) under connection concerning the upstream-of-centrifugal-clutch path in portion **b1**.

(Embodiment 3), which is a related example which is not claimed but is useful to understand the invention.

The related example which is not claimed but is useful to understand the invention illustrates an operation of restarting traction control after suspending traction control, and conditions therefor. The related example which is not claimed but is useful to understand the invention defines a variant of Embodiment 2. The structure and functional blocks of the motorcycle are the same as in Embodiment 1, and their description will not be repeated.

In the related example which is not claimed but is useful to understand the invention, the traction control section **602** utilizes the slip amount of the rear wheel **9** (which is the driving wheel) and an amount of change thereof to calculate a predicted time before the slip disappears (hereinafter referred to as the "predicted slip elimination time"). The reason for introducing the notion of predicted slip elimination time is to suspend traction control precisely at the point in time when the slip disappears (i.e., the slip amount becomes 0). Traction control is a technique for restricting the output of the engine or the like to reduce the driving force that is supplied to the rear wheel **9** (which is the driving wheel) and reduce slips. If traction control is continued in the absence of a slip, there will be a continued situation where no driving force is supplied to the rear wheel **9**, thus causing an oddness in the motorcycle **1**. Such oddness can be reduced by determining continuation and/or suspension of traction control through the use of predicted slip elimination time.

In a related example which is not claimed but is useful to understand the invention, if the predicted slip elimination time is equal to or greater than a control threshold $\delta$ which is defined therefor, the traction control section **602** continues traction control. On the other hand, if the predicted slip elimination time is less than the control threshold $\delta$ and satisfies a further condition, the traction control section **602** suspends the traction control.

Hereinafter, in a related example which is not claimed but is useful to understand the invention, the method of calculation of the predicted slip elimination time by the traction control section **602** will be described.

The traction control section **602** first calculates a slip acceleration. In the related example which is not claimed but is useful to understand the invention, slip acceleration is in units of [m/s$^2$], where "m" is distance (meter) and "s" is time (second).

In a related example which is not claimed but is useful to understand the invention, slip acceleration is determined as a time differential of slip velocity (unit: m/s). Slip velocity is a value which is obtained by subtracting the front-wheel speed from the rear-wheel speed. The traction control section **602** is able to determine a slip acceleration by dividing a difference in slip velocity at two given points of time by the difference in time. When expressed as the number of samplings to be made for measuring the front-wheel speed and the rear-wheel speed, for example, the two given points of time may be at a time interval over which 4 to 5 samples will be acquired.

Next, in a related example which is not claimed but is useful to understand the invention, the traction control section **602** calculates a predicted slip elimination time according to eq. 2 below.

```
(eq. 2)
predicted slip elimination time [s]=(-1)·slip velocity
/slip acceleration
```

The reason for the multiplication by the negative sign is to invert the sign so that the predicted slip elimination time will be determined as a positive amount of time in the related example which is not claimed but is useful to understand the invention. Multiplication by the negative sign is not essential. In the case where the sign is not inverted, the condition set forth below may be regarded as true when being equal to or greater than a threshold and yet less than zero.

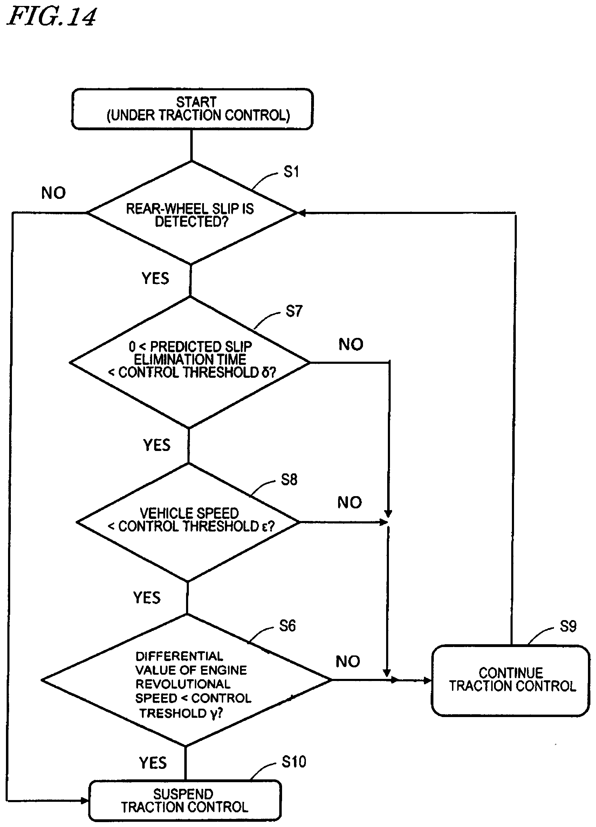

FIG. **14** shows a procedure of processing by the traction control section **602** according to the related example which is not claimed but is useful to understand the invention.

In a related example which is not claimed but is useful to understand the invention, Steps **S1** and **S6** are the same as in FIG. **12**, and their description is omitted. Hereinafter, steps **S7** to **S10** will be described.

In a related example which is not claimed but is useful to understand the invention, At step **S7**, the traction control section **602** determines whether the predicted slip elimination time satisfies the condition of being greater than 0 and smaller than the control threshold $\delta$. The control threshold $\delta$ is 500 ms, for example. If the condition is met, the process proceeds to step **S8**; if it is not met, the process proceeds to step **S9** to continue traction control.

In a related example which is not claimed but is useful to understand the invention, the reason for stipulating this condition is that, since more time is required until the slip disappears, it must be necessary to continue traction control.

In a related example which is not claimed but is useful to understand the invention, at step **S8**, the traction control section **602** determines whether the vehicle speed (e.g., the front-wheel speed) is less than a control threshold $\varepsilon$ or not. This determination is made in order to restrict the condition for temporarily suspending the traction control to only the case where the centrifugal clutch **300** is in a ride-the-clutch state. If the vehicle speed is less than the control threshold $\varepsilon$, the process proceeds to step **S6**; otherwise, the process proceeds to step **S9**.

In a related example which is not claimed but is useful to understand the **invention,** Step **S6** is a comparison between a differential value of engine revolutional speed and the control threshold $\nu$ , as has been described in Embodiment 2. This determination is made because there is no need to temporarily suspend traction control if the engine revolutional speed has not decreased.

In the related example which is not claimed but is useful to understand the invention, the traction control section **602** utilizes the slip velocity of the rear wheel **9** (which is the driving wheel) and an amount of change (slip acceleration) thereof to predict an amount of time required until a slip disappears. Then, the traction control section **602** temporarily interrupt TCS before the amount of time until the slip disappears actually becomes zero (i.e., 0 < predicted slip elimination time < control threshold $\delta$), thus minimizing lack of driving force. This allows to reduce any vehicle behavior that is not intended by the rider.

Next, similarly to Embodiments 1 and 2, the operation of the traction control section **602** will be described by paying attention to the relationship between the rotation speed of the upstream member of the centrifugal clutch **300** and the rotation speed of the downstream member, with reference to the control according to the related example which is not claimed but is useful to understand the invention.

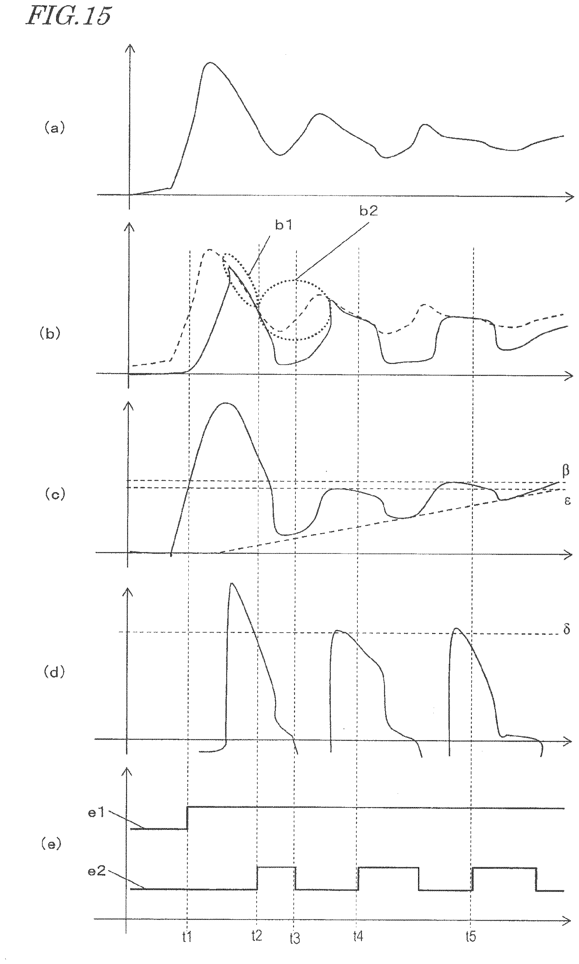

FIG. **15**, **(a)** to **(e)**, shows example waveforms according to the related example which is not claimed but is useful to understand the invention, paying attention to the rotation speed of the centrifugal clutch **300**.

FIG. **15(a)** shows an example waveform of the engine revolutional speed according to a related example, which is not claimed but is useful to understand the invention.

FIG. **15(b)** shows example waveforms of the clutch rotation speed according to a related example which is not claimed but is useful to understand the invention. A broken line represents an example waveform of the rotation speed of the upstream member of the centrifugal clutch **300**, whereas a solid line represents an example waveform of the rotation speed of the downstream member of the centrifugal clutch **300**. A threshold **T** is a rotation speed at which engagement between the upstream member and the downstream member of the centrifugal clutch **300** is completely lost.

FIG. **15(c)** shows example waveforms of the respective wheel speeds of the front wheel and rear wheel and the control threshold $\varepsilon$ according to a related example which is not claimed but is useful to understand the invention. A broken line represents a front-wheel speed, which corresponds to the vehicle speed, whereas a solid line represents the rear-wheel speed.

FIG. **15(d)** shows example waveforms of predicted slip elimination time and the control threshold $\delta$ according

to a related example which is not claimed but is useful to understand the invention.

FIG. **15(e)** shows waveforms of control flags which indicate suspension or activation of traction control according to a related example which is not claimed but is useful to understand the invention. The control flag **e1** indicates whether traction control is to be universally turned ON or OFF. The control flag e1 goes ON at time **t1** when the difference between the rear-wheel speed and the front-wheel speed (vehicle speed) becomes equal to or greater than a predetermined value, whereby traction control begins to be activated.

In a related example which is not claimed but is useful to understand the **invention,** even if the control flag **e1** goes ON to begin traction control, the engine revolutional speed, the rotation speed of the upstream member of the centrifugal clutch **300** (broken line), and the rear-wheel speed (solid line) keep increasing even after the start of traction control; this is because of the inertia of the rotating engine and wheel, as has been described with reference to FIG. **11B**.

In a related example which is not claimed but is useful to understand the **invention,** on the other hand, the control flag **e2** indicates that traction control is temporarily suspended while it is ON, and that traction control is activated while it is OFF.

In a situation where traction control is ON, it goes ON (i.e., rises) when: the predicted slip elimination time is greater than 0 and less than the control threshold $\delta$; the vehicle speed is less than the control threshold $\varepsilon$; and a differential value of the engine revolutional speed is less than the control threshold $\gamma$.

In a related example which is not claimed but is useful to understand the **invention,** For example, at time **t2**, the predicted slip elimination time is greater than 0 and less than the control threshold 6 as shown in **(d)**, the front-wheel speed (broken line) representing the vehicle speed is less than the control threshold $\varepsilon$, and the differential value of the engine revolutional speed is less than the control threshold $\gamma$; therefore, the control flag **e2** goes ON. As a result, traction control is temporarily suspended. In this situation, as shown in **(b)**, the rotation speed of the upstream member of the centrifugal clutch **300** increases, whereby the centrifugal clutch **300** engages and the rotation speed of the downstream member increases. As a result of this, driving force is supplied to the rear wheel **9** of the motorcycle **1**, so that the rider can continue riding without feeling oddnesses associated with lack of driving force.

In a related example which is not claimed but is useful to understand the invention, on the other hand, at time **t3**, the control threshold is less than 0, and thus the control flag **e2** in **(e)** goes OFF. As a result of this, traction control is activated again.

In a related example which is not claimed but is useful to understand the invention, note that rises and falls of the control flag **e2** are not necessarily in synchronization with the engine revolutional speed in **(a)**, the rotation speed of the upstream member of the centrifugal clutch (broken line) in **(b),** or the rear-wheel speed (solid line) in **(c).** The reason is that the operation needs to undergo mechanical changes based on the control flags, rather than being able to immediately follow along.

As has been described in connection with Embodiments 1 and 2, it can be said that the related example which is not claimed but is useful to understand the invention also performs a control which is similar to those in Embodiments 1 and 2. That is, the traction control section **602** is exerting control so that, in a state where the rear wheel **9** (which is the driving wheel) is slipping, the reduction rate (A) under non-connection concerning the upstream-of-centrifugal-clutch path in portion **b2** of FIG. **15(b)** is smaller than the reduction rate (B) under connection concerning the upstream-of-centrifugal-clutch path in portion **b1**.

Thus, embodiments of the present invention have been described.

The above embodiments illustrate engine revolutional speed as an example of rotation speed of an element in the first driving system **10a**, and rear-wheel speed as an example of rotation speed of an element in the second driving system **10b**. Instead of a rear-wheel speed, a slip amount may be adopted as a basis for determining whether or not to apply traction control. A slip amount is obtained by subtracting the front-wheel speed from the rear-wheel speed. A control threshold may be provided for the slip amount, and at step **S3** in FIG. **10** and FIG. **12**, the process may branch out depending on whether the slip amount is less than the control threshold or not.

In each of the above embodiments and the related example which is not claimed but is useful to understand the invention, both of engine revolutional speed and rear-wheel speed are utilized in determining whether to suspend or continue traction control. Each of these can be said to be an example of utilizing physical parameters in both the first driving system **10a** (upstream-of-centrifugal-clutch path) and the second driving system **10b** (downstream-of-centrifugal-clutch path). As used herein, a "physical parameter" may be rotation speed (i.e., the number of rotations per unit time) or torque, for example (hereinafter the same applies throughout the present specification).

However, the present invention is not limited to this example. As was mentioned at the beginning of the description of embodiments and the related example which is not claimed but is useful to understand the invention, a physical parameter in either one of the first driving system **10a** (upstream-of-centrifugal-clutch path) and the second driving system **10b** (downstream-of-centrifugal-clutch path) may be utilized in determining whether to suspend or continue traction control.

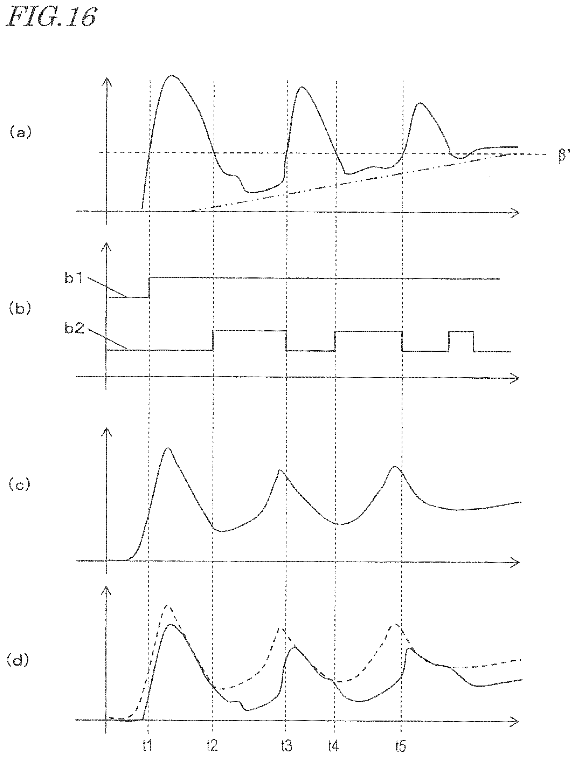

In a related example which is not claimed but is useful to understand the **invention,** for example, FIG. **16** shows an example of utilizing a rotation speed in the second driving system **10b** (downstream-of-centrifugal-clutch path) in determining whether to suspend or continue traction control. Specifically, FIG. **16** is an example of utilizing the wheel speed of the rear wheel **9** (which is the driving wheel) as a rotation speed in the second driving system **10b** (downstream-of-centrifugal-clutch path) and which is a related example which is not claimed but is useful to understand the invention.

FIG. **16(a)** shows a waveform of the rear-wheel speed, and FIG. **16(b)** shows waveforms of control flags which indicate suspension or activation of traction control according to a related example which is not claimed but is useful to understand the invention. For reference, FIG. **16(c)** shows the engine revolutional speed, and FIG. **16(d)** shows the rotation speed of the centrifugal clutch according to a related example which is not claimed but is useful to understand the invention.

FIG. **16(a)** shows the front-wheel speed with a chain double-dashed line, where a control threshold $\beta$ is indicated by a broken line parallel to the horizontal axis, according to a related example which is not claimed but is useful to understand the invention. Time **t1** is a point of time at which the rear-wheel speed becomes equal to or greater than the control threshold $\beta$.

In the related example which is not claimed but is useful to understand the **invention,** the solid line **b1** in FIG. **16(b)** is a control flag indicating whether traction control is to be universally turned ON or OFF. This control flag goes ON at time **t1** when the difference between the rear-wheel speed and the front-wheel speed (vehicle speed) becomes equal to or greater than a predetermined value, whereby traction control begins to be activated. As described earlier, even when the control flag of the solid line **b1** goes ON to begin traction control, due to the inertia of the rotating engine and wheel, there will be some lag before the engine revolution value or wheel speed actually shows a decreasing tendency. In FIG. **16**, too, time **t1** is exemplified as a point of time at which the engine revolution value or wheel speed exhibits a decreasing tendency.

In a related example which is not claimed but is useful to understand the invention, even after the control flag **b1** goes ON to begin traction control, the rear-wheel speed (solid line in FIG. **16(a)**), the engine revolutional speed (FIG. **16(c)**), and the rotation speed of the upstream member of the centrifugal clutch **300** (broken line in FIG. **16(d)**) keep increasing; this is because of the inertia of the rotating engine and wheel, as has been described with reference to FIG. **11B.**

In a related example which is not claimed but is useful to understand the invention, on the other hand, a solid line **b2** in FIG. **16(b)** indicates, in a situation where traction control is ON, a control flag which goes ON (i.e., rises) when the rear-wheel speed becomes less than the control threshold $\beta$, and goes OFF (i.e., falls) when the rear-wheel speed becomes equal to or greater than the control threshold $\beta$. The control flag of the solid line **b2** indicates that traction control is temporarily suspended while it is ON, and that traction control is activated while it is OFF.

In the example which is a related example that is not claimed but is useful to understand the invention of FIG. **16**, traction control is temporarily suspended between times **t2** and **t3** and between times **t4** and **t5**. As a result, in these periods, the engine revolution increases as shown in FIG. **16(c)**. With an increase in the engine revolution, the clutch rotation speed also increases. In FIG. **16(d)**, a broken line represents the rotation speed of the upstream member of the centrifugal clutch, whereas a solid line represents the rotation speed of the downstream member of the centrifugal clutch. When the engine revolution increases, the rotation speed of the upstream member of the centrifugal clutch (broken line) increases first. In a manner of following this increase, the rotation speed of the downstream member of the centrifugal clutch (solid line) increases. Note here that the rotation speed of the downstream member does not keep decreasing. This means that engagement between the upstream member and the downstream member of the centrifugal clutch is not lost.

As will be understood from the above description, it is possible to determine whether to suspend or continue traction control by only utilizing a physical parameter in the downstream-of-centrifugal-clutch path, such as the rear-wheel speed.

Thus, as a variant of Embodiment 1, it is possible to determine whether to suspend or continue traction control by only utilizing rotation speed in the second driving system **10b** (downstream-of-centrifugal-clutch path).

Note that this variant is also applicable to Embodiment 2 and according to the related example which is not claimed but is useful to understand the invention. In that case, however, a differential value of engine revolutional speed needs to be additionally detected.

As another variant of Embodiment 1, it is possible to determine whether to suspend or continue traction control by utilizing a rotation speed in the first driving system **10a** (upstream-of-centrifugal-clutch path). This variant is realized by utilizing e.g. engine revolutional speed, rather than the rotation speed of the rear-wheel speed as shown in FIG. **16(a)**. It would also be possible to utilize the rotation speed of any element other than the engine that is included in the upstream-of-centrifugal-clutch path.

While description of such a variant on the basis of figures is omitted, it may be operated in a similar manner to FIG. **16**. Specifically, a revolution (or the rotation speed of any other element corresponding thereto) at which the centrifugal clutch **300** having so far been engaged becomes disengaged may be set as a control threshold, and the control flag may be allowed to go ON at a point in time at which it becomes less than the control threshold, thereby temporarily suspending traction control. Then, when the revolutional speed becomes equal to or greater than the control threshold, traction control may be restarted again.

The aforementioned process is also applicable to Embodiment 2, where a differential value of engine revolutional speed is utilized. In other words, it is possible to determine whether to suspend or continue traction control by only utilizing the rotation speed of one or more elements in the upstream-of-centrifugal-clutch path.

In the present specification, the conditional branching in steps **S2**, **S3**, and **S6** of FIG. **10** or **12** is illustrated as determining whether a given velocity is less than a control threshold or not. Herein, "less than" may alternatively read "equal to or smaller than". The expression "less than, or equal to or smaller than" indicates that either one is interchangeably applicable.

While the present specification uses the expression "a state in which ... is slipping", the condition for identifying a slip has not been particularly mentioned; this is because it may vary depending on the conditions that are specific to the vehicle. For example, the state which is recognized as an occurrence of slipping may vary depending on the design concept (off-road model, on-road model, etc.) of the vehicle, tire wear, road surface states, and the like. Although an example has been illustrated where a slip amount is utilized in the evaluation as to whether a slip is occurring or not, a slip rate may be used instead. The choice as to which one is used would vary depending on the vehicle's specific design. At least, when the "slipping" condition which is set specifically to the vehicle is met, "a state in which ... is slipping" exists in the meaning of the present specification.

The present invention is practicable not only in terms of manufacture, sale, use, or the like of driving force control system, but also in the form of a vehicle equipped with such a driving force control system.

As was stated at the beginning of embodiments, a straddled vehicle, as one example of a vehicle according to the present invention, may also encompass a 3-wheel motorcycle and an ATV. Three-wheel motorcycles come in a type with one driving wheel, and also a type with plural driving wheels. On the other hand, an ATV usually has plural driving wheels. The above-described embodiments are straightforwardly applicable to any 3-wheel motorcycle with one driving wheel. As for the types of 3-wheel motorcycles and ATVs with plural driving wheels, the above-described embodiments would be applicable with respect to each driving wheel. Other possible examples of vehicles include ROVs (Recreational Off-Highway Vehicles), snowmobiles, and so on. The present invention is applicable to any vehicle in which a centrifugal clutch is mounted and which is capable of traction control.

Although the present specification has illustrated embodiments of motorcycles in which a continuously variable transmission (CVT) is mounted as the transmission mechanism, this is an example. A straddled vehicle in which a noncontinuous transmission mechanism is mounted as the transmission mechanism is also applicable.

## INDUSTRIAL APPLICABILITY

The driving force control system according to the present invention is broadly applicable to straddled vehicles having a front wheel and a rear wheel. This system is broadly usable in the attitude control technique for straddled vehicles which include a centrifugal clutch and which are equipped with a traction control system (TCS).

## REFERENCE SIGNS LIST

**1** motorcycle
**7** front wheel
**8a** rear-wheel speed sensor
**8b** front-wheel speed sensor
**9** rear wheel (driving wheel)
**10** engine unit
**10a** first driving system
**10b** second driving system
**100** engine
**200** continuously variable transmission (CVT)
**300** centrifugal clutch
**400** deceleration gear
**600** driving force controller
**601** secondary storage device
**602** traction control section
**610** driving force control system

**Claims**

1. A driving force control system (610) for use in a vehicle (1),
   the vehicle (1) including

   an engine (100),
   a driving wheel (9) to be driven by motive power from the engine (100), and
   a centrifugal clutch (300) provided in a transmission path of motive power between the engine (100) and the driving wheel (9),

   the driving force control system (610) being configured to adjust slipping of the driving wheel (9) in a state in which the driving wheel (9) is slipping, wherein,
   the centrifugal clutch (300) includes

   an upstream member (300a) mechanically connected to the engine (100) to rotate, and
   a downstream member (300b) to be mechanically connected with or disengaged from the upstream member (300a) based on a centrifugal force occurring in accordance with rotation of the upstream member (300a), wherein,

   with a centrifugal force which is in accordance with rotation of the upstream member (300a), automatically turns ON or OFF transmission of motive power between an upstream-of-centrifugal-clutch path (10a) from the engine (100) to the upstream member (300a) and a downstream-of-centrifugal-clutch path (10b) from the downstream member (300b) to the driving wheel (9); and
   the driving force control system (610) exerts control so that, in a state in which the driving wheel (9) is slipping, a reduction rate (A) under non-connection concerning the upstream-of-centrifugal-clutch path (10a) is smaller than a reduction rate (B) under connection concerning the upstream-of-centrifugal-clutch path (10a), wherein

   the reduction rate (A) under non-connection concerning the upstream-of-centrifugal-clutch path (10a) is a reduction rate in rotation speed of the upstream-of-centrifugal-clutch path (10a) when a difference exists between a rotation speed of the upstream member (300a) of the centrifugal clutch (300) and a rotation speed of the downstream member (300b) of the centrifugal clutch (300)
   and the reduction rate (B) under connection concerning the upstream-of-centrifugal-clutch path (10a) is a reduction rate in rotation speed of the upstream-of-centrifugal-clutch path (10a) when a rotation speed of the upstream member (300a) of the centrifugal clutch (300) is equal to a rotation speed of the downstream member (300b) of the centrifugal clutch (300) before a difference emerges between a rotation speed of the upstream member (300a) of the centrifugal clutch (300) and a rotation speed of the downstream member (300b) of the centrifugal clutch (300),
   **characterized in that** the driving force control system (610) includes a control section (602) to perform traction control in a state in which the driving wheel (9) is slipping, wherein
   the driving force control system (610) further comprises
   a first sensor to detect a rotation speed of the upstream-of-centrifugal-clutch path (10a), and
   a second sensor to detect a rotation speed of the downstream-of-centrifugal-clutch path (10b); and
   the control section (602) suspends the traction control or loosens the traction control when the rotation speed of the upstream-of-centrifugal-clutch path (10a) detected by the first sensor is less than, or equal to or smaller than, a preset first threshold (a) and the rotation speed of the downstream-of-centrifugal-clutch path (10b) detected by the second sensor is less than, or equal to or smaller than, a preset second threshold ($\beta$).

2. The driving force control system (610) of claim 1, wherein through continuous control so that the reduction rate (A) under non-connection concerning the upstream-of-centrifugal-clutch path is smaller than the reduction rate (B) under connection in a state in which the driving wheel (9) is slipping, the rotation speed of the upstream member (300a) of the centrifugal clutch (300) equals the rotation speed of the downstream member (300b) of the centrifugal clutch (300).

3. The driving force control system (610) of claim 1, wherein
   the control section (602) suspends the traction control or loosens the traction control in exerting control so that the reduction rate (A) under non-connection concerning the upstream-of-centrifugal-clutch path is smaller than the reduction rate (B) under connection.

4. The driving force control system (610) of claim 1, wherein the control section (602) performs the traction control by adjusting revolutional speed of the engine (100) in the upstream-of-centrifugal-clutch path (10a).

5. The driving force control system (610) of claim 1, wherein the first threshold (a) is set to a value higher than a rotation speed of the upstream-of-centrifugal-clutch path (10a) at which the upstream-of-centrifugal-clutch path (10a) and the downstream-of-centrifugal-clutch path (10b) having so far been connected is to be disconnected.

6. The driving force control system (610) of claim 1, wherein the second threshold (β) is set to a value higher than a rotation speed of the downstream-of-centrifugal-clutch path (10b) at which the upstream-of-centrifugal-clutch path (10a) and the downstream-of-centrifugal-clutch path (10b) having so far been connected is to be disconnected.

7. The driving force control system (610) of one of claims 1, 5 or 6, wherein,
the first sensor detects a value concerning revolutional speed of the engine (100) in the upstream-of-centrifugal-clutch path (10a); and
the second sensor detects a value concerning rotation speed of the driving wheel (9) in the downstream-of-centrifugal-clutch path (10b).

8. The driving force control system (610) of claim 7, wherein, in a situation where the traction control is suspended or loosened, the control section (602) begins the traction control or tightens the traction control when a value concerning an amount of change of revolutional speed of the engine (100) becomes equal to or greater than a preset threshold.

9. The driving force control system (610) of claim 8, wherein the control section (602) suspends the traction control or loosens the traction control when a value which is in accordance with a rate of change in one of the rotation speed of the upstream-of-centrifugal-clutch path(10a) detected by the first sensor and the rotation speed of the downstream-of-centrifugal-clutch path (10b) detected by the second sensor becomes less than, or equal to or smaller than, a preset threshold.

10. The driving force control system (610) of claim 9, further comprising a third sensor to detect a vehicle speed of the vehicle (1), wherein,
the second sensor detects a value concerning rotation speed of the driving wheel (9) in the downstream-of-centrifugal-clutch path (10b); and
the control section (602) suspends the traction control or loosens the traction control when a value which is in accordance with a rate of change in a slip velocity based on a rotation speed of the driving wheel (9) detected by the second sensor and the vehicle speed detected by the third sensor becomes less than, or equal to or smaller than, a threshold.

11. The driving force control system (610) of claim 9, wherein the control section (602) suspends the traction control or loosens the traction control further when the vehicle speed detected by the third sensor becomes equal to or smaller than a fourth threshold.

12. A vehicle (1) comprising:

   the driving force control system (610) of any of claims 1 to 11;
   the engine (100);
   the driving wheel (9); and
   the centrifugal clutch.

13. The vehicle (1) of claim 12 further comprising a non-driving wheel.

**Patentansprüche**

1. Antriebskraftsteuerungssystem (610) zur Verwendung in einem Fahrzeug (1),
wobei das Fahrzeug (1) beinhaltet:

   einen Motor (100),
   ein Antriebsrad (9), das von der Treibkraft von dem Motor (100) anzutreiben ist, und
   eine Fliehkraftkupplung (300), die in einem Übertragungsweg der Treibkraft zwischen dem Motor (100) und dem Antriebsrad (9) vorgesehen ist,

wobei das Antriebskraftsteuerungssystem (610) dazu eingerichtet ist, Schlupf des Antriebsrades (9) in einem Zustand anzupassen, indem das Antriebsrad (9) durchrutscht, wobei
die Fliehkraftkupplung (300) beinhaltet:

ein vorgeschaltetes Element (300a), das mechanisch mit dem Motor (100) verbunden ist, um sich zu drehen, und ein nachgeschaltetes Element (300b) zur mechanischen Verbindung oder Ausrückung von dem vorgeschalteten Element (300a) basierend auf einer Zentrifugalkraft, die entsprechend der Drehung des vorgeschalteten Elements (300a) auftritt, wobei

bei einer Zentrifugalkraft, die der Drehung des vorgeschalteten Elements (300a) entspricht, die Übertragung der Treibkraft zwischen einem der-Fliehkraftkupplung-vorgeschalteten-Weg (10a) von dem Motor (100) zu dem vorgeschalteten Element (300a) und einem der-Fliehkraftkupplung-nachgeschalteten-Weg (10b) von dem nachgeschalteten Element (300b) zu dem Antriebsrad (9) automatisch EIN oder AUS geschaltet wird; und das Antriebskraftsteuerungssystem (610) eine solche Steuerung ausübt, dass, in einem Zustand, in dem das Antriebsrad (9) durchrutscht, eine Reduktionsrate (A) bei Nicht-Verbindung bezüglich des der-Fliehkraftkupplung-vorgeschalteten-Weges (10a) geringer als eine Reduktionsrate (B) bei Verbindung bezüglich des der-Fliehkraftkupplung-vorgeschalteten-Weges (10a) ist, wobei

die Reduktionsrate (A) unter Nicht-Verbindung bezüglich des der-Fliehkraftkupplung-vorgeschalteten-Weges (10a) eine Reduktionsrate der Drehgeschwindigkeit des der-Fliehkraftkupplung-vorgeschalteten-Weges (10a) ist, wenn eine Differenz zwischen einer Drehgeschwindigkeit des vorgeschalteten Elements (300a) der Fliehkraftkupplung (300) und einer Drehgeschwindigkeit des nachgeschalteten Elements (300b) der Fliehkraftkupplung (300) vorhanden ist

und die Reduktionsrate (B) unter Verbindung bezüglich des der-Fliehkraftkupplung-vorgeschalteten-Weges (10a) eine Reduktionsrate der Drehgeschwindigkeit des der-Fliehkraftkupplung-vorgeschalteten-Weges (10a) ist, wenn eine Drehgeschwindigkeit des vorgeschalteten Elements (300a) der Fliehkraftkupplung (300) gleich einer Drehgeschwindigkeit des nachgeschalteten Elements (300b) der Fliehkraftkupplung (300) ist, bevor eine Differenz zwischen einer Drehgeschwindigkeit des vorgeschalteten Elements (300a) der Fliehkraftkupplung (300) und einer Drehgeschwindigkeit des nachgeschalteten Elements (300b) der Fliehkraftkupplung (300) auftritt, **dadurch gekennzeichnet, dass** das Antriebskraftsteuerungssystem (610) einen Steuerabschnitt (602) zur Durchführung einer Traktionsregelung in einem Zustand beinhaltet, in dem das Antriebsrad (9) durchrutscht, wobei das Antriebskraftsteuerungssystem (610) des Weiteren umfasst:

einen ersten Sensor zum Ermitteln einer Drehgeschwindigkeit des der-Fliehkraftkupplung-vorgeschalteten-Weges (10a), und
einen zweiten Sensor zum Ermitteln einer Drehgeschwindigkeit des der-Fliehkraftkupplung-nachgeschalteten-Weges (10b), und
wobei der Steuerabschnitt (602) die Traktionsregelung aufhebt oder die Traktionsregelung lockert, wenn die Drehgeschwindigkeit des der-Fliehkraftkupplung-vorgeschalteten-Weges (10a), die von dem ersten Sensor ermittelt wird, geringer als, oder gleich oder kleiner als ein voreingestellter erster Schwellenwert ($\alpha$) ist, und die Drehgeschwindigkeit des der-Fliehkraftkupplung-nachgeschalteten-Weges (10b), die von dem zweiten Sensor ermittelt wird, geringer als, oder gleich oder kleiner als ein voreingestellter zweiter Schwellenwert ($\beta$) ist.

2. Antriebskraftsteuerungssystem (610) nach Anspruch 1, wobei durch kontinuierliche Regelung, so dass die Reduktionsrate (A) unter Nicht-Verbindung bezüglich des der-Fliehkraftkupplung-vorgeschalteten-Weges kleiner als die Reduktionsrate (B) unter Verbindung in einem Zustand ist, in dem das Antriebsrad (9) durchrutscht, die Drehgeschwindigkeit des vorgeschalteten Elements (300a) der Fliehkraftkupplung (300) der Drehgeschwindigkeit des nachgeschalteten Elements (300b) der Fliehkraftkupplung (300) gleicht.

3. Antriebskraftsteuerungssystem (610) nach Anspruch 1, wobei der Steuerabschnitt (602) die Traktionsregelung aufhebt oder die Traktionsregelung bei der Ausübung der Regelung lockert, so dass die Reduktionsrate (A) unter Nicht-Verbindung bezüglich des der-Fliehkraftkupplung-vorgeschalteten-Weges kleiner als die Reduktionsrate (B) unter Verbindung ist.

4. Antriebskraftsteuerungssystem (610) nach Anspruch 1, wobei der Steuerabschnitt (602) die Traktionsregelung durch Anpassen der Drehzahl des Motors (100) in dem der-Fliehkraftkupplung-vorgeschalteten-Weg (10a) durchführt.

**5.** Antriebskraftsteuerungssystem (610) nach Anspruch 1, wobei der erste Schwellenwert ($\alpha$) auf einen Wert eingestellt wird, der höher als eine Drehgeschwindigkeit des der-Fliehkraftkupplung-vorgeschalteten-Weges (10a) ist, auf welcher der der-Fliehkraftkupplung-vorgeschaltete Weg (10a) und der der-Fliehkraftkupplung-nachgeschaltete-Weg (10b), die bisher verbunden waren, zu trennen sind.

**6.** Antriebskraftsteuerungssystem (610) nach Anspruch 1, wobei der zweite Schwellenwert ($\beta$) auf einen Wert eingestellt wird, der höher als eine Drehgeschwindigkeit des der-Fliehkraftkupplung-nachgeschalteten-Weges (10b) ist, auf welcher der der-Fliehkraftkupplung-vorgeschaltete Weg (10a) und der der-Fliehkraftkupplung-nachgeschaltete-Weg (10b), die bisher verbunden waren, zu trennen sind.

**7.** Antriebskraftsteuerungssystem (610) nach einem der Ansprüche 1, 5 oder 6, wobei
der erste Sensor einen Wert bezüglich der Drehzahl des Motors (100) in dem der-Fliehkraftkupplung-vorgeschalteten-Weg (10a) ermittelt; und
der zweite Sensor einen Wert bezüglich der Drehgeschwindigkeit des Antriebsrades (9) in dem der-Fliehkraftkupplung-nachgeschalteten-Weg (10b) ermittelt.

**8.** Antriebskraftsteuerungssystem (610) nach Anspruch 7, wobei in einer Situation, in der die Traktionsregelung aufgehoben oder gelockert ist, der Steuerabschnitt (602) die Traktionsregelung beginnt oder die Traktionsregelung strafft, wenn ein Wert bezüglich einer Änderungsgröße der Drehzahl des Motors (100) gleich oder größer als ein voreingestellte Schwellenwert wird.

**9.** Antriebskraftsteuerungssystem (610) nach Anspruch 8, wobei der Steuerabschnitt (602) die Traktionsregelung aufhebt oder die Traktionsregelung lockert, wenn ein Wert, der einer Änderungsgeschwindigkeit in einem aus der Drehgeschwindigkeit des der-Fliehkraftkupplung-vorgeschalteten-Weges (10a), die von dem ersten Sensor ermittelt wird, und der Drehgeschwindigkeit des der-Fliehkraftkupplung-nachgeschalteten-Weges (10b), die von dem zweiten Sensor ermittelt wird, niedriger als, oder gleich oder kleiner als ein voreingestellter Schwellenwert wird.

**10.** Antriebskraftsteuerungssystem (610) nach Anspruch 9, des Weiteren umfassend einen dritten Sensor zum Ermitteln einer Fahrzeuggeschwindigkeit des Fahrzeugs (1), wobei
der zweite Sensor einen Wert bezüglich der Drehgeschwindigkeit des Antriebsrades (9) in dem der-Fliehkraftkupplung-nachgeschalteten-Weg (10b) ermittelt; und
der Steuerabschnitt (602) die Traktionsregelung aufhebt oder die Traktionsregelung lockert, wenn ein Wert, der einer Änderungsgeschwindigkeit einer Schlupfgeschwindigkeit basierend auf einer Drehgeschwindigkeit des Antriebsrades (9), die von dem zweiten Sensor ermittelt wird, und der Fahrzeuggeschwindigkeit, die von dem dritten Sensor ermittelt wird, entspricht, niedriger als, oder gleich oder kleiner als ein Schwellenwert wird.

**11.** Antriebskraftsteuerungssystem (610) nach Anspruch 9, wobei der Steuerabschnitt (602) die Traktionsregelung des Weiteren aufhebt oder die Traktionsregelung lockert, wenn die Fahrzeuggeschwindigkeit, die von dem dritten Sensor ermittelt wird, gleich oder kleiner als ein vierter Schwellenwert wird.

**12.** Fahrzeug (1), umfassend:

das Antriebskraftsteuerungssystem (610) nach einem der Ansprüche 1, bis 11;
den Motor (100);
das Antriebsrad (9); und
die Fliehkraftkupplung.

**13.** Fahrzeug (1) nach Anspruch 12, des Weiteren umfassend ein Nicht-Antriebsrad.

**Revendications**

**1.** Système de contrôle de force d'entraînement (610) destiné à être utilisé dans un véhicule (1),
le véhicule (1) comprenant

un moteur (100),
une roue motrice (9) entraînée par la puissance motrice du moteur (100), et
un embrayage centrifuge (300) pourvu d'un chemin de transmission de la puissance motrice entre le moteur (100) et la roue motrice (9),

le système de contrôle de force d'entraînement (610) étant configuré pour régler le patinage de la roue motrice (9) dans un état où la roue motrice (9) patine, dans lequel l'embrayage centrifuge (300) comprend

un élément amont (300a) connecté mécaniquement au moteur (100) de manière à tourner, et
un élément aval (300b) à connecter mécaniquement à l'élément amont (300a) ou à désengager de celui-ci, sur base de la force centrifuge produite par la rotation de l'élément amont (300a), dans lequel,

avec une force centrifuge conforme à la rotation de l'élément amont (300a), le système met automatiquement en MARCHE ou à l'ARRÊT la transmission de puissance motrice entre un chemin en amont de l'embrayage centrifuge (10a) allant du moteur (100) à l'élément amont (300a) et un chemin en aval de l'embrayage centrifuge (10b) allant de l'élément aval (300b) à la roue motrice (9) ; et
le système de contrôle de la force d'entraînement (610) exerce un contrôle tel que, dans un état où la roue motrice (9) patine, le rapport de réduction (A) sans connexion relatif au chemin en amont de l'embrayage centrifuge (10a) est inférieur au rapport de réduction (B) sous connexion relatif au chemin en amont de l'embrayage centrifuge (10a), dans lequel
le rapport de réduction (A) sans connexion relatif au chemin en amont de l'embrayage centrifuge (10a) est le rapport de réduction de la vitesse de rotation du chemin en amont de l'embrayage centrifuge (10a) quand il existe une différence entre la vitesse de rotation de l'élément amont (300a) de l'embrayage centrifuge (300) et la vitesse de rotation de l'élément aval (300b) de l'embrayage centrifuge (300), et
le rapport de réduction (B) sous connexion relatif au chemin en amont de l'embrayage centrifuge (10a) est un rapport de réduction de la vitesse de rotation du chemin en amont de l'embrayage centrifuge (10a) quand la vitesse de rotation de l'élément amont (300a) de l'embrayage centrifuge (300) est égale à la vitesse de rotation de l'élément aval (300b) de l'embrayage centrifuge (300) avant qu'une différence n'émerge entre la vitesse de rotation de l'élément amont (300a) de l'embrayage centrifuge (300) et la vitesse de rotation de l'élément aval (300b) de l'embrayage centrifuge (300),
**caractérisé en ce que** le système de contrôle de la force d'entraînement (610) comprend une section de contrôle (602) pour mettre en œuvre un contrôle de traction dans un état où la roue motrice (9) patine, dans lequel le système de contrôle de la force d'entraînement (610) comprend en outre
un premier capteur pour détecter la vitesse de rotation du chemin en amont de l'embrayage centrifuge (10a), et
un deuxième capteur pour détecter la vitesse de rotation du chemin en aval de l'embrayage centrifuge (10b) ; et
la section de contrôle (602) suspend ou atténue le contrôle de traction quand la vitesse de rotation du chemin en amont de l'embrayage centrifuge (10a) détectée par le premier capteur est inférieure, ou inférieure ou égale, à un premier seuil préétabli (a), et la vitesse de rotation du chemin en aval de l'embrayage centrifuge (10b) détectée par le deuxième capteur est inférieure, ou inférieure ou égale, à un deuxième seuil préétabli ($\beta$).

2. Système de contrôle de force d'entraînement (610) selon la revendication 1, dans lequel, dans un contrôle en continu tel que le rapport de réduction (A) sans connexion relatif au chemin en amont de l'embrayage centrifuge est inférieur au rapport de réduction (B) sous connexion dans un état où la roue motrice (9) patine, la vitesse de rotation de l'élément amont (300a) de l'embrayage centrifuge (300) est égale à la vitesse de rotation de l'élément aval (300b) de l'embrayage centrifuge (300).

3. Système de contrôle de force d'entraînement (610) selon la revendication 1, dans lequel
la section de contrôle (602) suspend ou atténue le contrôle de traction en exerçant un contrôle tel que le rapport de réduction (A) sans connexion relatif au chemin en amont de l'embrayage centrifuge est inférieur au rapport de réduction (B) sous connexion.

4. Système de contrôle de la force d'entraînement (610) selon la revendication 1, dans lequel la section de contrôle (602) met en œuvre le contrôle de traction en réglant la vitesse de rotation du moteur (100) dans le chemin en amont de l'embrayage centrifuge (10a).

5. Système de contrôle de la force d'entraînement (610) selon la revendication 1, dans lequel le premier seuil (a) est réglé à une valeur supérieure à la vitesse de rotation du chemin en amont de l'embrayage centrifuge (10a) à laquelle le chemin en amont de l'embrayage centrifuge (10a) et le chemin en aval de l'embrayage centrifuge (10b) qui étaient jusqu'alors connectés doivent être déconnectés.

**6.** Système de contrôle de la force d'entraînement (610) selon la revendication 1, dans lequel le deuxième seuil ($\beta$) est réglé à une valeur supérieure à la vitesse de rotation du chemin en aval de l'embrayage centrifuge (10b) à laquelle le chemin en amont de l'embrayage centrifuge (10a) et le chemin en aval de l'embrayage centrifuge (10b) qui étaient jusqu'alors connectés doivent être déconnectés.

**7.** Système de contrôle de la force d'entraînement (610) selon l'une des revendications 1, 5 ou 6, dans lequel
le premier capteur détecte une valeur relative à la vitesse de rotation du moteur (100) dans le chemin en amont de l'embrayage centrifuge (10a) ; et
le deuxième capteur détecte une valeur relative à la vitesse de rotation de la roue motrice (9) dans le chemin en aval de l'embrayage centrifuge (10b).

**8.** Système de contrôle de la force d'entraînement (610) selon la revendication 7, dans lequel, dans une situation où le contrôle de traction est suspendu ou atténué, la section de contrôle (602) commence ou renforce le contrôle de traction quand la valeur relative à une quantité de changement de la vitesse de rotation du moteur (100) devient supérieure ou égale à un seuil préétabli.

**9.** Système de contrôle de la force d'entraînement (610) selon la revendication 8, dans lequel la section de contrôle (602) suspend ou atténue le contrôle de traction quand la valeur conforme au taux de changement soit de la vitesse de rotation du chemin en amont de l'embrayage centrifuge (10a) détectée par le premier capteur, soit de la vitesse de rotation du chemin en aval de l'embrayage centrifuge (10b) détectée par le deuxième capteur, devient inférieure, ou inférieure ou égale, à un seuil préétabli.

**10.** Système de contrôle de la force d'entraînement (610) selon la revendication 9, comprenant en outre un troisième capteur pour détecter la vitesse du véhicule (1), dans lequel
le deuxième capteur détecte une valeur relative à la vitesse de rotation de la roue motrice (9) dans le chemin en aval de l'embrayage centrifuge (10b) ; et
la section de contrôle (602) suspend ou atténue le contrôle de traction quand la valeur conforme au taux de changement de la vitesse de patinage basée sur la vitesse de rotation de la roue motrice (9) détectée par le deuxième capteur et sur la vitesse du véhicule détectée par le troisième capteur devient inférieure, ou inférieure ou égale, à un seuil.

**11.** Système de contrôle de la force d'entraînement (610) selon la revendication 9, dans lequel la section de contrôle (602) suspend ou atténue encore le contrôle de traction quand la vitesse du véhicule détectée par le troisième capteur devient inférieure ou égale à un quatrième seuil.

**12.** Véhicule (1) comprenant :

le système de contrôle de force d'entraînement (610) selon l'une quelconque des revendications 1 à 11 ;
le moteur (100) ;
la roue motrice (9) ; et
l'embrayage centrifuge.

**13.** Véhicule (1) selon la revendication 12, comprenant en outre une roue non motrice.

FIG.1

F ←——→ Re

FIG.2

**FIG.3**

FIG.4

EP 3 128 157 B1

32

# FIG.5

*FIG.6*

*FIG.7*

## FIG.8

*FIG.9*

ENGINE REVOLUTIONAL
SPEED SENSOR

92

610

601

8b

FRONT-WHEEL
WHEEL SPEED SENSOR

REAR-WHEEL
WHEEL SPEED SENSOR

8a

633

GYROSCOPE

634

LATERAL
ACCELERATION SENSOR

91

THROTTLE SENSOR

638

BRAKE MODULATOR

600

645

VEHICLE SPEED
CALCULATION SECTION

646

BANK ANGLE
ACQUISITION
SECTION

647

LATERAL-SKID
ACCELERATION
CALCULATION SECTION

649

JUDGMENT SECTION

650

LONGITUDINAL-FORCE
REDUCTION CONTROL
SECTION

TRACTION CONTROL
SECTION 602

651

DRIVING FORCE
ESTIMATION SECTION

652

BRAKING FORCE
ESTIMATION SECTION

653

LONGITUDINAL FORCE
ESTIMATION SECTION

639

SPARK PLUG

640

FUEL INJECTOR

614

CLUTCH ACTUATOR

641

THROTTLE ACTUATOR

17

GROOVE WIDTH
ADJUSTMENT
ACTUATOR

EP 3 128 157 B1

36

*FIG.10*

```
          ┌─────────────────────────────┐
          │           START             │
          │   (UNDER TRACTION CONTROL)  │
          └─────────────────────────────┘
                        │
                        ▼
                    ╱───────╲  S1
         NO    ╱─────────────────╲
        ◄─────   REAR-WHEEL SLIP IS
              ╲      DETECTED?    ╱
               ╲─────────────────╱
                        │
                       YES
                        │
                        ▼
                    ╱───────╲  S2
              ╱─────────────────╲
              │    ENGINE        │      NO
              │ REVOLUTIONAL     │ ──────────┐
              │ SPEED < CONTROL  │           │
              ╲  TRESHOLD α?    ╱            │
               ╲───────────────╱             │
                      │                      │
                     YES                     │
                      │                      │
                      ▼                      │
                  ╱───────╲  S3              │              S4
            ╱─────────────────╲              ▼      ┌──────────────────────────┐
            │ REAR-WHEEL WHEEL │ ───────────────►   │ CONTINUE TRACTION CONTROL│
            │ SPEED < CONTROL  │     NO              └──────────────────────────┘
            ╲   THRESHOLD β?  ╱
             ╲───────────────╱
                    │
                   YES
                    │  S5
                    ▼
          ┌─────────────────────────┐
          │ SUSPEND TRACTION CONTROL│
          └─────────────────────────┘
                    │
                    ▼
          ┌─────────────────────────┐
          │          END            │
          └─────────────────────────┘
```

## FIG.11A

(a)

D1

α

(b)

β

(c)

t1    t2 ¦ t4    t5
        t3

*FIG.11B*

*FIG.11C*

(a)

(b)

T

(c)

(d)

t1    t2 t3

## FIG.12

START
(UNDER TRACTION CONTROL)

S1
REAR-WHEEL SLIP IS
DETECTED?

NO

YES

S2
ENGINE
REVOLUTIONAL
SPEED < CONTROL
TRESHOLD α?

NO

YES

S3
REAR-WHEEL WHEEL SPEED
< CONTROL THRESHOLD β?

NO

YES

S4
CONTINUE
TRACTION CONTROL

S5
SUSPEND
TRACTION CONTROL

S6
DIFFERENTIAL
VALUE OF ENGINE
REVOLUTIONAL
SPEED < CONTROL
TRESHOLD γ?

NO

YES

S7
RESTART
TRACTION CONTROL

FIG.13A

*FIG.13B*

*FIG.14*

START
(UNDER TRACTION CONTROL)

S1

REAR-WHEEL SLIP IS
DETECTED?

NO

YES

S7

0 < PREDICTED SLIP
ELIMINATION TIME
< CONTROL THRESHOLD δ?

NO

YES

S8

VEHICLE SPEED
< CONTROL THRESHOLD ε?

NO

YES

S6

DIFFERENTIAL
VALUE OF ENGINE
REVOLUTIONAL
SPEED < CONTROL
TRESHOLD γ?

NO

YES

S10

SUSPEND
TRACTION CONTROL

S9

CONTINUE
TRACTION CONTROL

*FIG.15*

*FIG.16*

(a)

β'

(b)

b1

b2

(c)

(d)

t1  t2  t3  t4  t5

**EP 3 128 157 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2695761 A2
- JP 5240076 A
- JP 2006071096 A